# EUROPEAN PATENT APPLICATION

(11) **EP 2 120 212 A1**
(43) Date of publication of application: **18.11.2009**
(21) Application number: 08711449.2
(22) Date of filing: 18.02.2008
(51) Int. Cl.: G06T 11/80, G06T 3/00, H04N 1/387, H04N 5/232, H04N 5/272

(54) **IMAGE PROCESSING DEVICE, IMAGE PROCESSING METHOD, AND IMAGE PROCESSING SYSTEM**

(30) Priority: 12.03.2007 JP 2007061735
(71) Applicant: Sony Corporation, Tokyo 108-0075 (JP)
(72) Inventor: SAKO, Yoichiro, Tokyo 108-0075 (JP); TSURUTA, Masaaki, Tokyo 108-0075 (JP); OZAKI, Nozomu, Tokyo 108-0075 (JP); KAWAKAMI, Itaru, Tokyo 108-0075 (JP); HOSODA, Yasuhide, Tokyo 108-0075 (JP); ASUKAI, Masamichi, Tokyo 108-0075 (JP); ITO, Taiji, Tokyo 108-0075 (JP); SUGINO, Akinobu, Tokyo 108-0075 (JP); SEKIZAWA, Hidehiko, Tokyo 108-0075 (JP); SANO, Akane, Tokyo 108-0075 (JP); EBISAWA, Kan, Tokyo 108-0075 (JP)
(74) Representative: Robinson, Nigel Alexander Julian
(86) International application number: PCT/JP2008/052625
(87) International publication number: WO 2008/111363

(57) **Abstract**

A replacement area is set within an image expressed with captured image data. A pixel area with image content that can be processed without greatly altering the entire image content, for instance, may be designated as the replacement area.

Replacement image data are generated by executing processing for replacing all of or part of the pixel data in the replacement area with insertion image data. The insertion image data are image data containing text, graphics or the like, such as an advertisement, a message or a translation. Consequently, various types of information can be provided in the replacement image data, a message from the user can be incorporated in the replacement image data, or better user convenience can be assured through the replacement image data.

## Description

### Technical field

The present invention relates to an image processing apparatus, an image processing method and an image processing system that may be adopted in image processing executed on captured image data.

### Background art

(Patent reference 1) Japanese Laid Open Patent Publication No. 2002-15223 (Patent reference 2) Japanese Laid Open Patent Publication No. 2003-242410

There are systems known in the related art that enable alteration in advertising content provided in a computer game signboard, a billboard in the background of a television broadcast in a sports stadium or the like.
Patent references 1 and 2 listed above each disclose a technology that may be adopted when altering the advertising mode or the type of advertisement.

### Disclosure of the invention

### (Problems to be solved by the invention)

As digital still cameras and video cameras enjoy ever increasing popularity as consumer products, even the ordinary present day user is able to capture diverse images with ease in a recreational environment. In addition, the typical user today is able to edit an image (a photographic still image or a video image) he has captured by using a personal computer or the like and thus, the user's expectations as to what he can do with captured images has changed significantly.
By enabling even more diverse types of image processing on the strength of the technological advance described above so as to, for instance, allow the user to obtain advertising information or another type of information through a captured image or to choose to insert information into the image, a higher level of user convenience will be assured and images will be used in an even wider range of entertaining applications.

Accordingly, an object of the present invention is to increase the added value of the captured image by processing the captured image so as to provide information to the user through the image, provide a wider range of user enjoyment, assure a higher level of user convenience and the like.

### (Means for solving the problems)

An image processing apparatus according to the present invention comprises a captured image acquisition unit that obtains captured image data, an insertion image storage unit in which insertion image data are stored, a replacement area setting unit that sets a replacement area within an image expressed with the captured image data obtained by the captured image acquisition unit, and a replacement image generation unit that generates replacement image data by executing processing for replacing all of or part of the pixel data within the replacement area with insertion image data read out from the insertion image storage unit.

The captured image acquisition unit may include an imaging unit that captures an image and obtain the captured image data by engaging the imaging unit in imaging operation. The imaging unit may include an image sensor constituted with a CCD sensor or a CMOS sensor.
The captured image acquisition unit may include a communication unit engaged in communication with an external communication device, and obtain the captured image data received as the communication unit engages in communication with the external communication device. It is to be noted that the external communication device as referred to in this context may be a server device or any of various types of electronic devices other than a server device, invariably equipped with a communication function.
The captured image acquisition unit may include a reproduction unit that reproduces information stored in a portable recording medium, and obtain the captured image data as the reproduction unit is engaged in reproduction of the portable recording medium.
The image processing apparatus may further comprise a communication unit engaged in communication with an external communication device and in such a case, insertion image data transmitted from the external communication device and received at the communication unit are stored into the insertion image storage unit.

The image processing apparatus may further comprise a save processing unit that executes save processing for saving the replacement image data generated by the replacement image generation unit and/or replacement area information related to a replacement area having been set by the replacement area setting unit.
The save processing unit may include a recording unit that records information into a recording medium, and execute the save processing by recording the replacement image data and/or the replacement area information into the recording medium.
The save processing unit may further include a communication unit engaged in communication with an external communication device, and execute the save processing by transmitting the replacement image data and/or the replacement area information to the external communication device.

The image processing apparatus further comprises an image output unit that executes output processing for the replacement image data generated by the replacement image generation unit.
The image output unit may include a display unit and, for the output processing, display-outputs the replacement image data at the display unit.
The image output unit may further include a communication unit that engages in communication with an external communication device, and for the output processing, transmit-outputs the replacement image data to the external communication device via the communication unit.
The image output unit may include a recording unit that records information into a portable recording medium, and execute the output processing by recording via the recording unit the replacement image data into the portable recording medium.

In addition, the replacement area setting unit detects a specific image in the captured image data by executing image analysis processing on the captured image data and sets the replacement area based upon the detected image.
The insertion image data may express an advertising image, a message text image or a translation text image.

An image processing method according to the present invention comprises steps of; obtaining captured image data, setting a replacement area within an image expressed with the obtained captured image data, reading out stored insertion image data and generating replacement image data by replacing all or part of the pixel data in the replacement area with the insertion image data having been read out.

An image processing system according to the present invention enables communication between an image processing apparatus and a server device. The image processing apparatus comprises a captured image acquisition unit that obtains captured image data, a reception unit that receives insertion image data transmitted from the server device, an insertion image storage unit in which the insertion image data having been received at the reception unit are stored, a replacement area setting unit that sets a replacement area within an image expressed with the captured image data obtained by the captured image acquisition unit, and a replacement image generation unit that generates replacement image data by executing processing for replacing all of or part of the pixel data within the replacement area with insertion image data read out from the insertion image storage unit. The server device includes a transmission unit that transmits insertion image data to the image processing apparatus.

An image processing apparatus according to the present invention comprises a captured image acquisition unit that obtains captured image data, a replacement area setting unit that sets a replacement area within an image expressed with the captured image data obtained by the captured image acquisition unit, and a save processing unit that executes save processing for saving the captured image data and replacement area information related to the replacement area set by the replacement area setting unit.
An image processing apparatus according to the present invention comprises a recording/reproduction unit that records and reproduces captured image data and replacement area information related to a replacement area set for the captured image data by correlating the captured image data and the replacement area information to each other, an insertion image storage unit in which insertion image data are stored and a replacement image generation unit that generates replacement image data by obtaining the captured image data and the replacement area information from the recording/reproduction unit and by executing processing on the obtained captured image data for replacing all of or part of the pixel data in the replacement area indicated by the replacement area information with insertion image data read out from the insertion image storage unit.

According to the present invention described above, a replacement area is set within an image expressed with the captured image data. A pixel area containing image content that would not be greatly affected by image content processing, for instance, may be selected as the replacement area. Such a pixel area may be, for instance, an image area where a billboard is present, an image area where the sky is present, an image area containing text or the like within the image.
The replacement image data are generated through replacement processing for replacing all of or part of the pixel data in the replacement area with insertion image data. The insertion image data are image data containing, for instance, text, graphics or the like, such as an advertisement, a message or a translation.

### (Effect of the Invention)

According to the present invention, replacement image data are generated to provide various types of information such as an advertisement, a message and translation text through image processing executed on captured image data by ensuring that the resulting image will not be drastically altered. An advantage is thus achieved in that the added value of the captured image is increased without greatly affecting the image content.

### Brief Description of the Drawings

(FIG. 1A) An illustration presenting an external view of an imaging apparatus according to an embodiment of the present invention
(FIG. 1B) An illustration presenting an external view of an imaging apparatus according to an embodiment of the present invention
(FIG. 1C) An illustration presenting an external view of an imaging apparatus according to an embodiment of the present invention
(FIG. 1D) An illustration presenting an external view of an imaging apparatus according to an embodiment of the present invention
(FIG. 2) A block diagram of an imaging apparatus according to an embodiment of the present invention
(FIG. 3A) An illustration presenting a system operation mode according to an embodiment of the present invention
(FIG. 3B) An illustration presenting a system operation mode according to an embodiment of the present invention
(FIG. 3C) An illustration presenting a system operation mode according to an embodiment of the present invention
(FIG. 4) A block diagram presenting the server device according to an embodiment of the present invention
(FIG. 5A) An illustration showing an example of a replacement image according to an embodiment of the present invention
(FIG. 5B) An illustration showing an example of a replacement image according to an embodiment of the present invention
(FIG. 5C) An illustration showing an example of a replacement image according to an embodiment of the present invention
(FIG. 6A) An illustration showing an example of a replacement image according to an embodiment of the present invention
(FIG. 6B) An illustration showing an example of a replacement image according to an embodiment of the present invention
(FIG. 6C) An illustration showing an example of a replacement image according to an embodiment of the present invention
(FIG. 7A) An illustration showing an example of a replacement image according to an embodiment of the present invention
(FIG. 7B) An illustration showing an example of a replacement image according to an embodiment of the present invention
(FIG. 7C) An illustration showing an example of a replacement image according to an embodiment of the present invention
(FIG. 8A) An illustration showing an example of a replacement image according to an embodiment of the present invention
(FIG. 8B) An illustration showing an example of a replacement image according to an embodiment of the present invention
(FIG. 8C) An illustration showing an example of a replacement image according to an embodiment of the present invention
(FIG. 9A) An illustration showing an example of a replacement image according to an embodiment of the present invention
(FIG. 9B) An illustration showing an example of a replacement image according to an embodiment of the present invention
(FIG. 9C) An illustration showing an example of a replacement image according to an embodiment of the present invention
(FIG. 10A) An illustration showing a providing operation of insertion image data according to an embodiment of the present invention
(FIG. 10B) An illustration showing a providing operation of insertion image data according to an embodiment of the present invention
(FIG. 11A) An illustration showing a providing operation of insertion image data according to an embodiment of the present invention
(FIG. 11B) An illustration showing a providing operation of insertion image data according to an embodiment of the present invention
(FIG. 11C) An illustration showing a providing operation of insertion image data according to an embodiment of the present invention
(FIG. 12) An illustration of an image saving format according to an embodiment of the present invention
(FIG. 13) An illustration of an image saving format according to an embodiment of the present invention
(FIG. 14) A flowchart of a processing example I of the image analysis/replacement according to an embodiment of the present invention
(FIG. 15) A flowchart of replacement area setting processing of a processing example II of the image analysis/replacement according to an embodiment of the present invention
(FIG. 16) A flowchart of image replacement processing of a processing example III of the image analysis/replacement according to an embodiment of the present invention
(FIG. 17A) A flowchart presenting an example of an operational procedure of an imaging apparatus according to an embodiment of the present invention
(FIG. 17B) A flowchart presenting an example of an operational procedure of an imaging apparatus according to an embodiment of the present invention
(FIG. 17C) A flowchart presenting an example of an operational procedure of an imaging apparatus according to an embodiment of the present invention
(FIG. 17D) A flowchart presenting an example of an operational procedure of an imaging apparatus according to an embodiment of the present invention
(FIG. 18A) A flowchart presenting an example of an operational procedure of an imaging apparatus according to an embodiment of the present invention
(FIG. 18B) A flowchart presenting an example of an operational procedure of an imaging apparatus according to an embodiment of the present invention
(FIG. 19A) A flowchart presenting an example of an operational procedure of an imaging apparatus according to an embodiment of the present invention
(FIG. 19B) A flowchart presenting an example of an operational procedure of an imaging apparatus according to an embodiment of the present invention
(FIG. 19C) A flowchart presenting an example of an operational procedure of an imaging apparatus according to an embodiment of the present invention
(FIG. 20)An illustration presenting structural elements of an image processing apparatus according to an embodiment of the present invention

- 1: imaging apparatus
- 2: display unit
- 2a: display panel unit
- 3: imaging unit
- 6: imaging control unit
- 7: display control unit
- 10: system controller
- 11: operation input unit
- 12: image analysis/replacement unit
- 14: storage unit
- 15: communication unit
- 17: position detection unit
- 18: insertion image storage unit
- 19: translation processing unit
- 20: image acquisition unit
- 21: image output unit
- 22: save processing unit

### (Best Mode for Carrying Out the Invention)

The following is a description of the image processing apparatus, the image processing method and the image processing system achieved in an embodiment of the present invention. The image processing apparatus is embodied as an imaging apparatus in the following description. It is to be noted that as explained in reference to variations and examples of expanded applications, the image processing apparatus in the embodiment of the present invention may be a device other than an imaging apparatus.
The various aspects of the embodiment are described in the following order.
1) Examples of appearances that the imaging apparatus may assume
2) Imaging apparatus, system configuration and server device
3) Examples of images that may be generated
4) Replacement area and insertion image data
5) Insertion image data acquisition
6) Examples of image saving formats
7) Example I of processing that may be executed by the image analysis/replacement unit
8) Example II of processing that may be executed by the image analysis/replacement unit
9) Examples of operational procedures
10) Advantages of the embodiment, variations and expanded applications

### 1. Examples of appearances that the imaging apparatus may assume

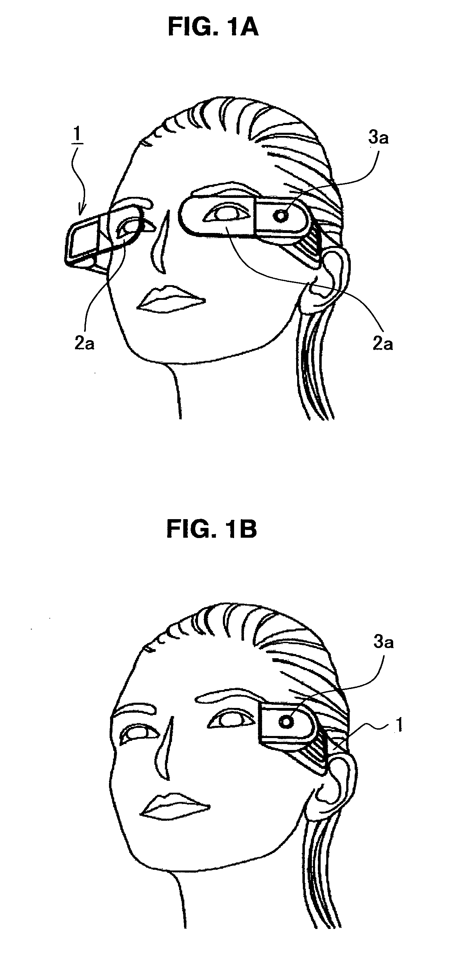

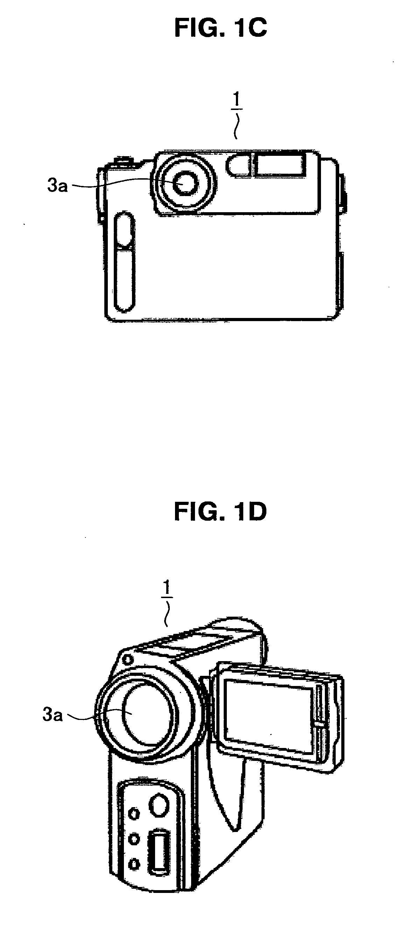

While an imaging apparatus 1 in the embodiment may adopt any of various modes, examples of appearances that it may take on are presented in FIGS. 1A, 1B, 1C and 1D.
FIG. 1A shows an imaging apparatus 1 embodied as an eyewear-type display camera. The imaging apparatus 1 includes an attaching unit assuming a semicircular frame structure to range from, for instance, one side of the user's head through the back of the user's head to the other side of the user's head, and can be worn by the user as the frame is hooked over her ears, as shown in the figure.
An imaging lens 3a is disposed to face forward, so that an image of a subject in the user's visual field may be captured.
In addition, a pair of display panel units 2a and 2a, one for the left eye and the other for the right eye, is set directly in front of the user's eyes, i.e., the positions occupied by the lenses in a regular pair of glasses, as the user puts on the imaging apparatus. The display panel units 2a may be constituted with, for instance, liquid crystal panels, and they can be set in a through state, i.e., a transparent state, as shown in the figure, or a semitransparent state by controlling their transmittance. The user is able to carry on normal activity while wearing the imaging apparatus with the display panel units 2 set in the through state.
It is to be noted that instead of a pair of display panel units 2a, each corresponding to one of the user's eyes, the imaging apparatus may include a single display panel unit corresponding to just one eye.

While the imaging apparatus 1 in FIG. 1B is similar to the imaging apparatus in the previous example in that it is worn at the user's head, the imaging apparatus in FIG. 1B includes no display panel unit 2a. The user attaches it to his head by placing an attaching unit over, for instance, his ears. An imaging lens 3a is disposed so as to face forward, in order to capture an image of a subject within the user's visual field in this state.

While FIGS. 1A and 1B each show an imaging apparatus 1 that is worn on the head of the user via an eyewear-type or headset-type attaching unit, the imaging apparatus 1 may be worn by the user via any of various attaching structures. In other words, it may be worn by the user via any attaching unit, which may be a headphone-type attaching unit, a neckband-type attaching unit or an ear hook-type attaching unit. In addition, it may be worn by the user via an attaching member such as a clip, attaching it to a regular pair of eyeglasses, a visor or a headphone. Furthermore, it does not need to be worn at the user's head.
While the imaging direction is set toward the visual field of the user, the imaging lens 3a may instead be mounted so as to capture an image behind the user, to the side of the user, above or below the user wearing the imaging apparatus, or the imaging apparatus may include a plurality of imaging systems used to capture images along a single direction or several different directions.
Moreover, the imaging apparatus may include an imaging direction adjustment mechanism that allows manual adjustment of the subject direction or automatic adjustment of the subject direction in conjunction with a single imaging lens 3 a or a plurality of imaging lenses 3 a.

FIG. 1C shows an imaging apparatus 1 assuming the structure of a standard digital still camera.
FIG. 1D shows an imaging apparatus 1 assuming the structure of a standard video camera.
The present invention may be embodied as a handheld imaging apparatus 1 such as that shown in FIG. 1C or 1D. While either figure shows an imaging lens 3a alone, the camera will include a panel display unit to be used as an imaging monitor and a display device such as a viewfinder.

It will be obvious that an imaging apparatus capable of capturing still images or video images may take on a mode other than those shown in FIGS. 1A, 1B, 1C and 1D. For instance, the imaging apparatus 1a in the embodiment may be a device such as a portable telephone, a PDA (personal digital assistant) unit or a portable personal computer equipped with an imaging function.
In addition, an imaging apparatus assuming any of these modes may include a microphone for picking up external sounds so as to obtain, during the imaging operation, an audio signal to be recorded together with the image data. It may further include a speaker unit or an earphone unit through which the sound is output.
Furthermore, a light emitting unit constituted with, for instance, an LED (light emitting diode) for illuminating the subject or an electronic flash unit for emitting flash light when capturing a still image may be disposed near the imaging lens 3 a.

### 2. Imaging apparatus, system configuration and server device

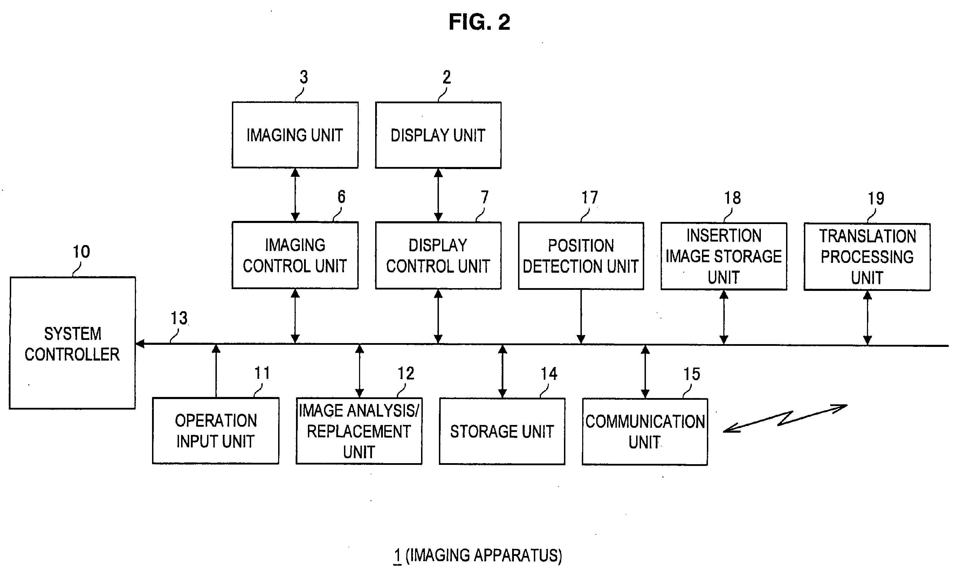

A structural example for the imaging apparatus 1 is described in reference to FIG. 2.
A system controller 10, constituted with a microcomputer that includes, for instance, a CPU (central processing unit), a ROM (read-only memory), a RAM (random access memory), a non-volatile memory unit and an interface unit, functions as a control unit that controls the entire imaging apparatus 1. The system controller 10 engages various units in execution of specific operations by executing various types of arithmetic processing and exchanging via a bus 13 control signals and the like with the individual units based upon a program held in the built-in ROM or the like.

An imaging unit 3 includes an imaging optical system, an image sensor unit and an imaging signal processing unit.
The imaging optical system in the imaging unit 3 includes a lens system constituted with an imaging lens 3a such as any of those shown in FIGS. 1A through 1D, an aperture, a zoom lens, a focus lens and the like, a drive system that engages the lens system in focus operation or zoom operation, and the like.
In addition, the image sensor unit in the imaging unit 3 includes a solid-state image sensor array that detects imaging light obtained at the imaging optical system and executes photoelectric conversion on the imaging light to generate imaging signals. The solid-state image sensor array may be, for instance, a CCD (charge coupled device) sensor array or a CMOS (complementary metal oxide semiconductor) sensor array.
The imaging signal processing unit in the imaging unit 3, which includes a sample hold/AGC (automatic gain control) circuit that executes gain adjustment and waveform shaping for the signals obtained via the solid-state image sensor and a video A/D converter, obtains captured image data constituted of digital data. It also executes white balance processing, brightness processing, color signal processing, blur correction processing and the like on the captured image data.

Captured image data are obtained through an imaging operation executed at the imaging unit 3 equipped with the imaging optical system, the image sensor unit and the imaging signal processing unit described above.
The image data obtained through the imaging operation executed at the imaging unit 3 are processed at an imaging control unit 6.
The imaging control unit 6 executes, under control executed by a system controller 10, processing for converting the captured image data to data in a specific image data format and processing for providing the captured image data resulting from the format conversion to an image analysis/replacement unit 12, a storage unit 14, a communication unit 15 or a display control unit 7 in correspondence to the operating condition.
The imaging control unit 6 further executes on/off control for the imaging operation executed at the imaging unit 3, drive control for the zoom lens and the focus lens in the imaging optical system, control on the sensitivity level and the frame rate at the image sensor unit, parameter control for the various types of processing executed at the imaging signal processing unit, setting operation for setting specific processing to be executed and the like, based upon instructions provided from the system controller 10.

The image analysis/replacement unit 12 executes image analysis processing and image composition processing for the captured image data obtained at the imaging apparatus 1.
For instance, it executes processing for detecting a replacement area in the image by analyzing the captured image data obtained via the imaging unit 3.
In addition, it generates replacement image data through image replacement processing (image composition) whereby pixel data in the detected replacement area are replaced with insertion image data.
The processing executed by the image analysis/replacement unit, the replacement area, the insertion image data, the replacement image data and the like are to be described in detail later.

Captured image data designated as the processing target by the image analysis/replacement unit 12 may be image data other than captured image data (still image data or video image data) obtained through imaging operation executed at the imaging unit 3 as described above.
Namely, the imaging apparatus 1 is also capable of obtaining captured image data resulting from imaging operation executed at an external imaging apparatus. For instance, captured image data obtained through imaging operation executed at an external imaging apparatus may be received at the communication unit 15 directly from the external imaging apparatus or via a server device.
In addition, captured image data generated through imaging operation executed at an external imaging apparatus may be recorded into a portable recording medium and the captured image data may then be obtained at the subject imaging apparatus as the data from portable recording medium are reproduced in the storage unit 14 (provided that the storage unit 14 is equipped with a reproduction function enabling it to reproduce data from the portable recording media).
In other words, captured image data received at the communication unit 15 or captured image data reproduced and read out from a portable recording medium may be designated as the processing target for the image analysis/replacement unit 12.

The image analysis/replacement unit 12 may be constituted with a microcomputer or a DSP (digital signal processor) used as a video processor. In addition, while FIG. 2 shows the system controller 10 constituted with a microcomputer and the image analysis/replacement unit as separate blocks independent of each other, the functions of the image analysis/replacement unit 12 may instead be provided in software started up within the system controller 10.

The imaging apparatus 1 provides the user with display via a display unit 2 and the display control unit 7.
The display unit 2 includes a display panel unit 2a constituted with a liquid crystal panel or the like as described earlier and a display drive unit that executes display drive for the display panel unit 2a.
The display drive unit is constituted with a pixel drive circuit via which image data provided from the imaging control unit 6 are brought up on display at the display panel unit 2a, which may be constituted with a liquid crystal display unit. The pixel drive circuit brings up display at the display panel unit 2a by applying drive signals generated based upon video signals to individual pixels arrayed in a matrix pattern at the display panel unit 2a with predetermined horizontal/vertical drive timing.

Under control executed by the system controller 10, the display control unit 7 drives the pixel drive circuit in the display unit 2 to bring up a specific display at the display panel unit 2a.
Namely, it brings up on display at the display panel unit 2a a monitor image captured by the imaging unit 3, an image reproduced based upon captured image data taken into the storage unit 14, an image expressed by data received at the communication unit 15, various types of characters or the like.
It is also capable of adjusting the luminance level, executing color correction, adjusting the contrast, adjusting the sharpness (edge emphasis) and the like for the display image. It is further capable of generating an enlarged image by enlarging part of the image data, generating a reduced image, executing image effect processing for rendering specific effects such as soft focus, mosaic, brightness inversion, highlighting part of the image on display (emphasis display) and overall color balance, separating or composing images in order to provide the captured image in a split display, executing processing for generating character images or graphic images and for incorporating a generated image in the captured image, and the like.
In addition, the display control unit 7 is capable of setting the display panel unit 2a in a through state (a transparent or semitransparent state) by controlling the display drive unit based upon an instruction issued by the system controller 10 so as to control the transmittance at each pixel in the display panel unit 2a.

The storage unit 14 is used to save various types of data. It may be used to save, for instance, captured image data or replacement image data to be described in detail later.
The storage unit 14 may be constituted with a solid-state memory such as a RAM or a flash memory, or it may be constituted with an HDD (hard disk drive).
As an alternative, a recording/reproduction drive corresponding to a specific type of portable recording medium such as a memory card with a built-in solid-state memory, an optical disk, a magneto-optical disk or a hologram, instead of a built-in recording medium, may be used as a storage unit.
It will be obvious that both a built-in memory such as a solid-state memory or an HDD and a recording/reproduction drive corresponding to a specific type of portable recording medium may be installed.
Captured image data or replacement image data are recorded and saved into the storage unit 14 under control executed by the system controller 10.
In addition, it reads out data recorded therein and provides the data thus read out to the system controller 10, the display control unit 7 and the like under control executed by the system controller 10.

The communication unit 15 exchanges data with an external communication device. The communication unit 15 may engage in network communication with, for instance, a network access point via short-range wireless communication in compliance with a wireless LAN protocol, the Bluetooth protocol or the like, or it may engage in direct wireless communication with an external communication device equipped with the corresponding communication function.
In addition, it may engage in communication with the external communication device through wired connection with the external communication device, instead of through wireless connection.
The external communication device with which the communication unit engages in communication may be, for instance, a server device 70 or an external device 80 such as a display device or a storage device to be described later.

A position detection unit 17 is installed in the imaging apparatus 1.
The position detection unit 17 may be, for instance, a GPS reception unit. The GPS reception unit receives radio signals from GPS (global positioning system) satellites and outputs latitude/longitude information indicating the current position to the system controller 10.
It is to be noted that the position detection unit 17 may instead detect the current position through a WiFi (wireless fidelity) service or through a position information service provided by a mobile telephone company, or it may detect the current position by combining the WiFi service or the position information service with the GPS information.

In an insertion image storage unit 18, insertion image data to be used by the image analysis/replacement unit 12 are stored. As described in detail later, such insertion image data may express a text image providing an advertisement, a message or the like, or a graphic image.
Various types of insertion image data may be stored in advance in the insertion image storage unit 18, or insertion image data originating from, for instance, the server device 70 and received at the communication unit 15 may be stored into the insertion image storage unit 18.
The insertion image storage unit 18 may be constituted with a solid-state memory such as a RAM or a flash memory, or it may be constituted with an HDD. As an alternative, a recording/reproduction drive for a specific type of portable recording medium may be used as the insertion image storage unit. In addition, while it is shown in FIG. 2 as an entity separate from the storage unit 14, part of the memory area in the recording medium in the storage unit 14 may be allocated to be used as the insertion image storage unit 18.

A translation processing unit 19 executes translation processing on text (text in the captured image) detected through the analysis processing executed by the image analysis/replacement unit 12. It then provides text data resulting from the translation processing to the image analysis/replacement unit 12 to be used as insertion image data.
It is to be noted that the translation processing unit 19 may be achieved in the form of a translation software program in the system controller 10.

The imaging apparatus 1 includes an operation input unit 11 for user operation.
The operation input unit 11 may include operation members such as keys or dials so as to detect a user operation as the user operates a specific key or the like, or it may adopt a structure that enables it to sense a specific user action.
In the former case, the operation input unit will include operation members used to, for instance, turn on/off power, engage the imaging system in operation (e.g., shutter operation, zoom operation or signal processing instruction operation), provide a specific display (e.g., select specific display content or adjust the display), and the like.

In addition, the operation input unit may include an operation member such as a touch pad or a touch panel. A touch panel may be disposed at, for instance, the display unit 2 so as to allow the user to enter operational instructions by touching the display screen.
The operation input unit may include the touch panel mentioned above, a cross key, a jog dial or the like to be used as an operation member via which a pointer such as a cursor can be manipulated on the screen. As an alternative, the cursor or the like on the screen may be moved in response to a movement of a remote controller equipped with a built-in acceleration sensor, an angular speed sensor or the like, hand-held by the user.
It is ideal to perform various operations via operation keys, dials, a touch panel or the like, assuming that the imaging apparatus is structured as shown in FIG. 1C or 1D.

However, in the case of a headset imaging apparatus such as that shown in FIG 1A or 1B, it may include operation keys, dials, a touch panel or the like, or a remote controller may be used in conjunction with the imaging apparatus. Since it will be difficult to dispose numerous operation members and the like at such an imaging apparatus, it will be ideal to assume a structure that detects an operation input by sensing a user action.

A structure that enables the imaging apparatus to sense user actions may include an acceleration sensor, an angular speed sensor, a vibration sensor, a pressure sensor or the like.
For instance, as the user lightly raps a side of the imaging apparatus 1, an acceleration sensor, a vibration sensor or the like may sense the impact and the system controller 10 may register a user operation when, for example, the lateral acceleration exceeds a predetermined value. In addition, by detecting whether the user has rapped the right side (the portion equivalent to a side of eyeglasses) or the left side of the imaging apparatus via an acceleration sensor or an angular speed sensor, a specific operation corresponding to the rapped side, distinguishable from other operations, can be detected.
Furthermore, as the user turns his head, nods his head or the like, the particular user movement may be detected via an acceleration sensor or an angular speed sensor so as to enable the system controller 10 to recognize a user operation.
Moreover, pressure sensors may be disposed on the left side and the right side (corresponding to the sides of eyeglasses) of the imaging apparatus 1 and, as the user presses his finger against the right side, a telephoto zoom operation may be detected, whereas as the user presses his finger against the left side area, a wide angle zoom operation may be detected.

Moreover, the imaging apparatus may include a biological sensor and may recognize an operational input based upon user biological information detected via the biological sensor. Such biological information may be pulse rate information, heart rate information, electrocardiogram information, electromyogram information, respiration information (indicating, for instance, the breathing speed, the breathing depth, the ventilation volume or the like), perspiration information, GSR (galvanic skin response) information, blood pressure information, oxemia information, skin surface temperature information, brainwave information (e.g., α wave, β wave, θ wave or γ wave), blood flow information or eye movement information.
In this case, the system controller 10 recognizes the information detected via the biological sensor as an operational input by the user. For instance, the user may consciously move his eyes (he may change the line of sight or may blink) and as the biological sensor detects, for instance, three blinks by the user, the detected blinks may be judged to indicate a specific operational input. In addition, based upon the biological information detected by the biological sensor, the user may be judged to have put on the imaging apparatus 1 or the user can be judged to have taken off the imaging apparatus 1, or a specific user having put on the imaging apparatus can be identified. The system controller 10 may then turn on/off the power based upon the detected information.
It is to be noted that the biological sensor may be disposed on the inside of the attaching frame via which an eyewear-type imaging apparatus 1 is worn, so as to detect any of the various types of information listed above as it comes in contact with the side or the back of the user's head. As an alternative, a biological sensor worn over a specific area of the user's body, instead of a biological sensor disposed at the attaching frame of the imaging apparatus 1, may be utilized.
In addition, the camera that captures an image of the user's eyes may be utilized to detect the condition of the user's eyes, a movement of the user's eyes, the condition of the user's pupils or the like.

The operation input unit 20 provides information obtained via an operation member, an acceleration sensor, an angular speed sensor, a vibration sensor, a pressure sensor, a biological sensor or the like as described above to the system controller 10 which then detects a user operation based upon the information provided thereto.
It is to be noted that user actions may be detected via another type of sensor such as a sensor that detects the user's voice or a sensor that detects movement of the user's lips.

The structure of the imaging apparatus 1 described above simply represents an example. Various components may be added or omitted depending upon specific operations to be actually executed or specific functions to be actually fulfilled.

A major feature characterizing the imaging apparatus in the embodiment is the operations executed by the image analysis/replacement unit 12. Namely, it executes image analysis on the captured image data having been obtained and sets a replacement area based upon the image analysis results. It then generates replacement image data by replacing pixel data in the replacement area with insertion image data.
The replacement image data are generated by replacing part of the content of the captured image with different content.
Replacement image data generated by replacing part of the content of the captured image data with other content such as advertising text, message text, translation text or graphics expressing an image that will add value to the content of the captured image.
Then, by displaying the image expressed by the replacement image data, diverse information can be provided to the user, the user is able to display a specific message or better user convenience is assured.

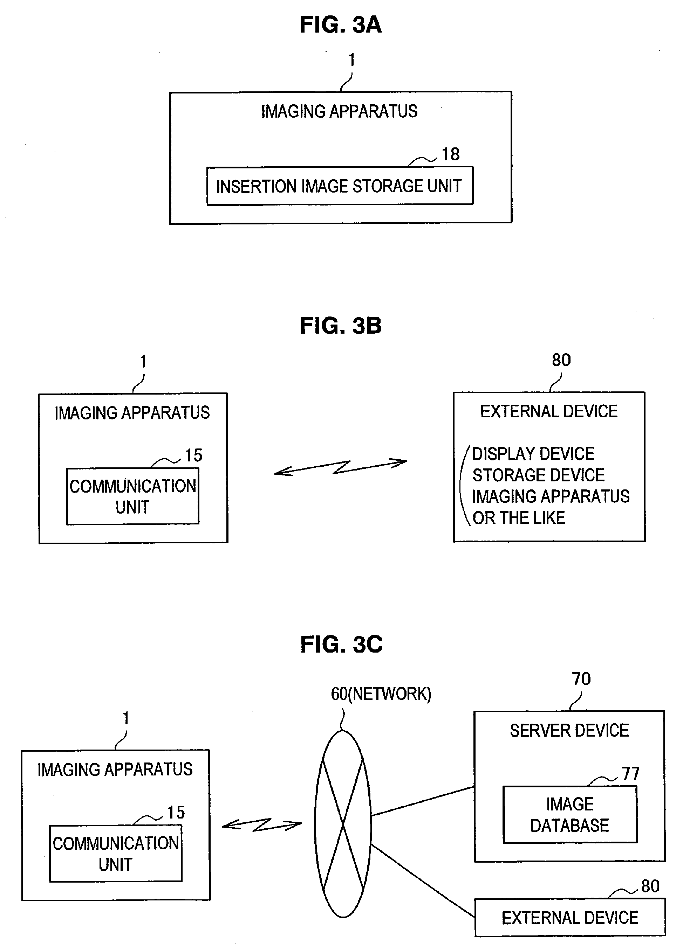

FIGS. 3A through 3C each present an example of an operation mode that the imaging apparatus 1 may assume in relation to an external communication device. The external communication device is an electronic device capable of conducting data communication with the imaging apparatus 1, which may be the server device 70 or any of various types of external devices 80 other than the server device 70.

FIG 3A shows the imaging apparatus 1 engaged in operation by itself.
In this situation, captured image data obtained through, for instance, imaging operation can be designated as an image replacement processing target.
In addition, provided that a reproduction unit capable of reproducing information in a portable recording medium such as an optical disk or a memory card constitutes the storage unit 14, the image replacement processing may be executed on captured image data read out from the portable recording medium.
The replacement image data are generated by replacing part of the captured image data designated as the processing target with insertion image data stored in the insertion data image storage unit 18.
The replacement image data thus generated can be saved into the storage unit 14 through save processing.
In addition, the replacement image data having been generated can be brought up on display at the display unit 2 through output processing.
Furthermore, if the imaging apparatus includes a recording unit that records information into a portable recording medium, output processing for the replacement image data having been generated may be executed by recording the replacement image data into the portable recording medium.

FIG. 3B shows the imaging apparatus 1 engaged in communication with an external device 80 via the communication unit 15. The external device 80 may be a display device, a storage device or another imaging apparatus. In other words, the external device is an electronic device capable of communicating with the imaging apparatus 1. In more specific terms, the external device 80 may be another imaging apparatus 1 assuming a structure such as that shown in FIG. 2 or any of various types of devices including a data server, a personal computer, a data recording device, a video player, a video camera and digital still camera all equipped with a communication function and a portable telephone, a PDA unit and the like all equipped with an imaging function.

In this mode, the imaging apparatus 1 is able to obtain captured image data to undergo the image replacement processing from the external device 80. For instance, the imaging apparatus may receive captured image data having been generated through imaging operation executed at the external device 80 constituted with an imaging apparatus or captured image data saved at the external device 80 constituted with a storage device and may designate the captured image data thus received as the processing target.
The replacement image data having been generated may be saved into the internal storage unit 14 or they may be transmitted via the communication unit 15 to an external device 80 (storage device) to be saved into a recording medium at the external device 80.
Through the output processing executed for the replacement image data having been generated, the replacement image data may be brought up on display at the display unit 2 or they may be transmitted to an external device 80 constituted with a display device to be brought up on display thereat.
It is to be noted that the communication with the external device 80 may be carried out through wired communication instead of through wireless communication.

FIG. 3C shows the imaging apparatus 1 engaged in communication with an external device 80 and the server device 70 connected to a network 60 such as the Internet, via the communication unit 15 equipped with a communication access function for accessing the network 60.
The network 60 may not be the Internet and may be any of various types of networks, e.g., a portable telephone communication network, a PHS communication network, an ad hoc network or a LAN.
The imaging apparatus may engage in operation similar to that described in reference to FIG. 3B, by conducting communication with the external device 80.

The server device 70 in the example presented in the figure is capable of providing insertion image data to the imaging apparatus 1.
Insertion image data are stored in the insertion image storage unit 18 at the imaging apparatus 1 and insertion image data read out from the insertion image storage unit 18 are used in the image replacement processing, as explained earlier. Such insertion image data may be initially provided from the server device 70 to the imaging apparatus 1 so as to enable the use of insertion image data with diverse content such as advertisements and enable updates on the content of the insertion image data.
The server device 70 includes an image database 76 where various types of insertion image data are accumulated. Such a server device is capable of providing insertion image data, selected by applying diverse criteria, to the imaging apparatus 1.
It is to be noted that the captured image data to undergo the processing may be provided from the server device 70 to the imaging apparatus 1. In addition, replacement image data generated at the imaging apparatus 1 may be saved at the server device 70 or may be transferred to the external device 80.

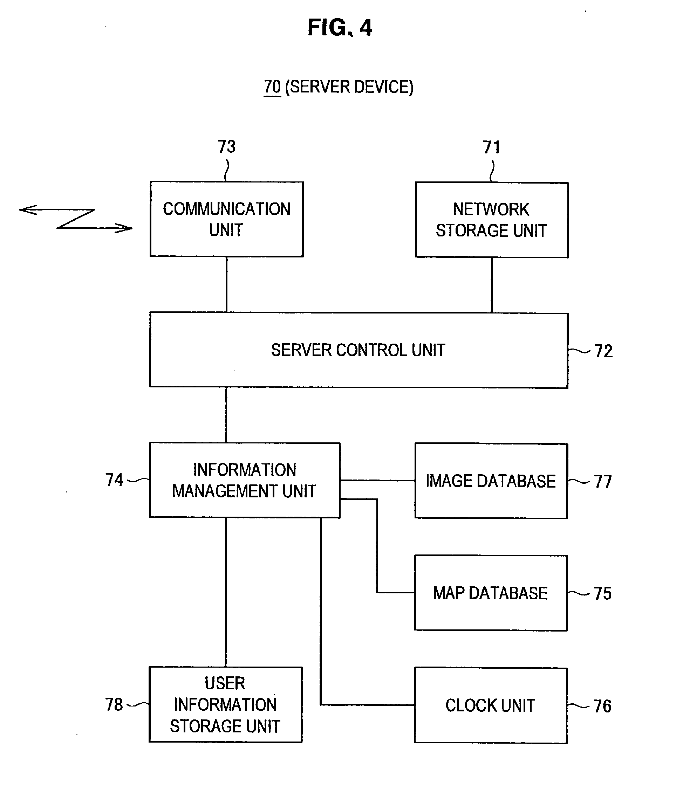

FIG 4 presents a structural example of the server device 70.
As described earlier, the server device 70 is capable of providing insertion image data or captured image data to the imaging apparatus 1 through communication carried out via, for instance, the network 60.
The server device 70 includes a server control unit 72, a network storage unit 71, a communication unit 73, an information management unit 74, a map database 75, a clock unit 76, an image database 77 and a user information storage unit 78.

In the network storage unit 71, which may be constituted with, for instance, an HDD, image data and the like transmitted from an imaging apparatus 30 or an imaging display apparatus 1 via the network 60 are saved. It is also used as a buffer where image data or the like to be exchanged between the imaging apparatus 1 and the external device 80 are temporarily stored during transfer processing.
The communication unit 73 engages in data communication with the communication unit 26 at the imaging apparatus 1 or with a communication unit at the external device 80 via the network 60.
The server control unit 72 executes operational control required for the server device 70. In more specific terms, it executes control operation for providing replacement image data to the imaging apparatus 1.

The information management unit 74, the map database 75, the clock unit 76, the image database 77 and the user information storage unit 78 are blocks engaged in operation for providing the replacement image data to the imaging apparatus 1.
Map information is stored in the map database 75.
The clock unit 76 keeps the current date/time (year / month / day / hour / minute / second).
Various types of insertion image data to be used as, for instance, advertising images are stored in the image database 76.
In the user information storage unit 78, user registration information corresponding to the user of the imaging apparatus 1 to which the server device 70 is to provide replacement image data is stored. Such user information may be stored in correspondence to, for instance, identification information unique to the particular imaging apparatus unit 1 (or in correspondence to the address or the like used for communication). The user information may be information provided by the user at the time of registration, such as the age, gender, hobbies, preferences.

The information management unit 74 executes processing for searching through the image database 77 for insertion image data to be provided to the imaging apparatus 1 in correspondence to the current date/time, the current position of the imaging apparatus 1, the user information or the like.
For instance, the information management unit 74 may search for insertion image data with the advertising content to be provided to the user at the particular time point based upon the current date/time kept by the clock unit 76.
Or the information management unit 74 may search for insertion image data with the optimal advertising content in correspondence to the current position of the imaging apparatus 1, according to the current position information transmitted from the imaging apparatus 1. At this time, the information management unit is able to ascertain the current position of the imaging apparatus 1 by referencing the map information stored in the map database 75 and select insertion image in correspondence to the ascertained position.
Or the information management unit 74 may search for insertion image data with advertising content suited to the particular user based upon the user information of the imaging apparatus 1, stored in the information storage unit 78.

### (3) Examples of images that may be generated

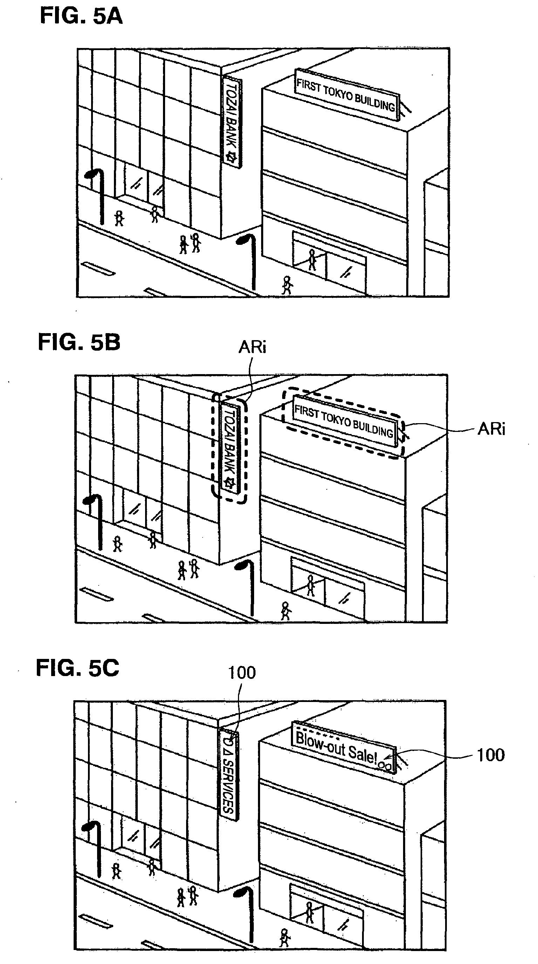

FIGS. 5A through 5C, 6A through 6C, 7A through 7C, 8A through 8C and 9A through 9C illustrate exemplary images as replacement image data generated at the imaging apparatus 1. FIGS. 5A, 6A, 7A, 8A and 9A each show a captured image, whereas FIGS. 5B, 6B, 7B, 8B and 9B each indicate a replacement area that may be set in the captured image. FIGS. 5C, 6C, 7C, 8C and 9C each show a replacement image having been generated.

FIG 5A shows a captured image of a street scene. The image includes signboards on buildings.
The areas occupied by the signboards in the image are set as replacement areas ARi, as shown in FIG. 5B.
Insertion image data are inserted in pixel ranges corresponding to the replacement areas ARi set as described above. In other words, the original pixel data are replaced with the insertion image data. As a result, a replacement image is generated with different advertising content shown in the signboards, as shown in FIG. 5C.

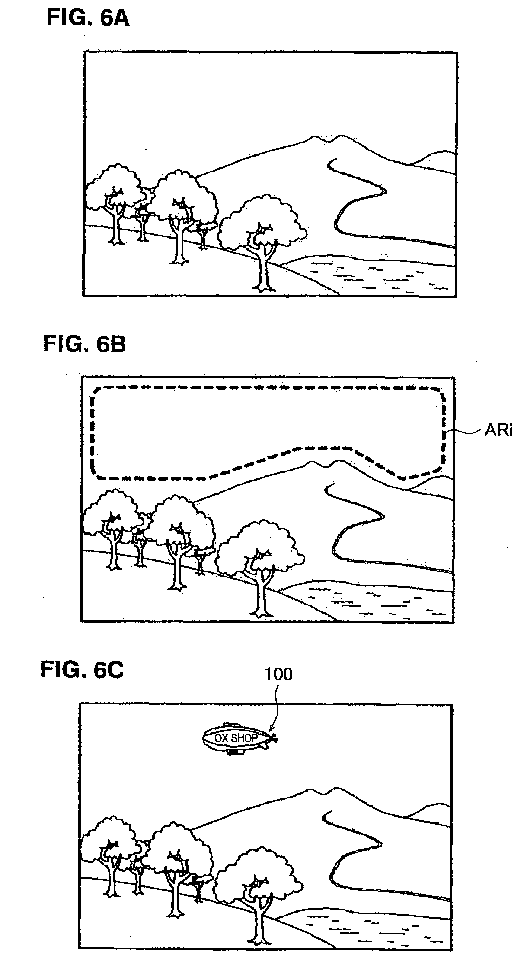

FIG. 6A shows a captured image of a landscape. The image contains an area of sky.
The area taken up by the sky in the image is selected as a replacement area ARi, as shown in FIG. 6B.
Insertion image data are then inserted over part of the pixel range designated as the replacement area ARi. The insertion image data may express a blimp carrying an advertising message.
As a result, replacement image with a blimp flying through the sky carrying an advertisement is generated, as shown in FIG 6C.

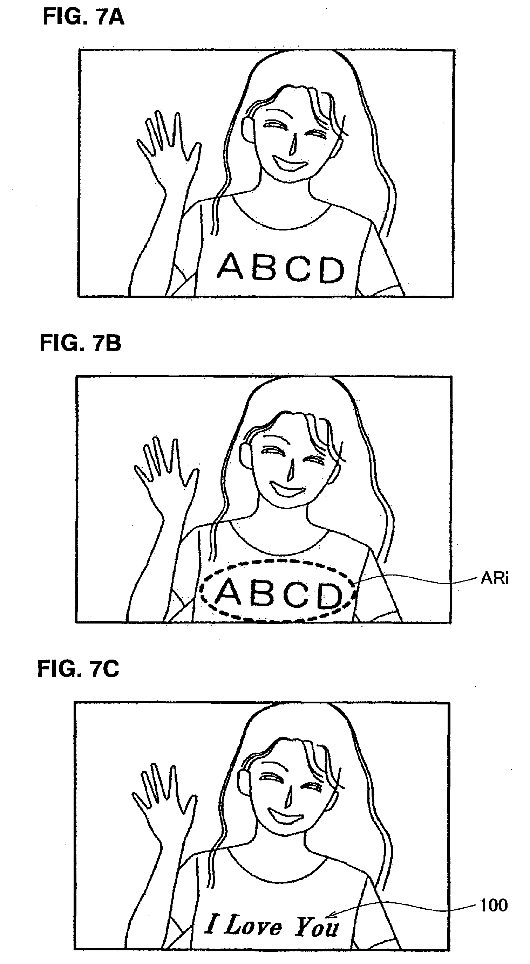

FIG. 7A shows a captured image of a person. The person in the image is wearing a top with printed letters on the front.
The area occupied by the letters in the image is set as a replacement area Ari, as shown in FIG. 7B.
Insertion image data are then inserted over the pixel range designated as the replacement area ARi. The insertion image data may express, for instance, a message text image.
As a result, a replacement image is generated with the letters on the clothing replaced with the message text, as shown in FIG. 7C.

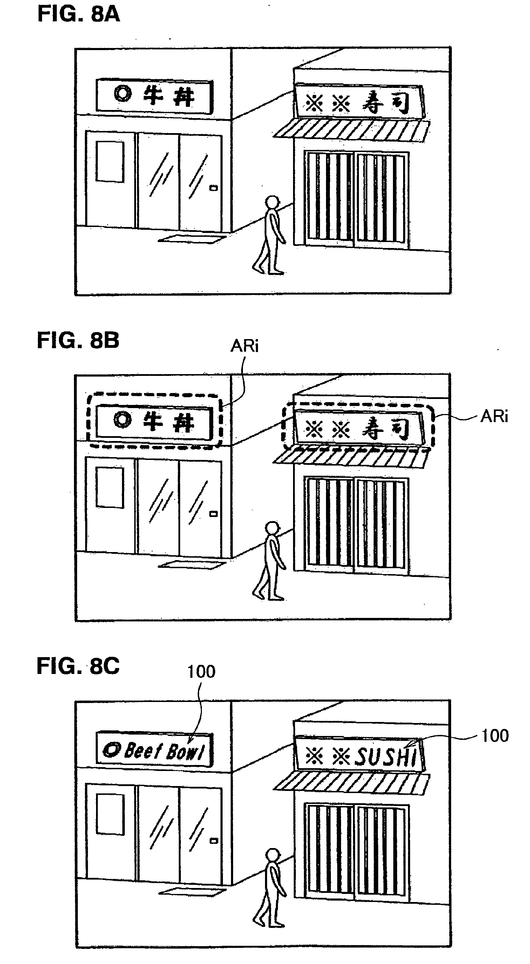

FIG 8A shows a captured image of a street scene. The image includes signboards on storefronts.
The areas occupied by the signboards in the image are set as replacement areas ARi, as shown in FIG. 8B.
Insertion image data are then inserted over the pixel ranges designated as the replacement areas ARi. The insertion image data may express, for instance, translation text images.
As a result, a replacement image is generated with the letters (Japanese characters) on the store's signboards replaced with English translation, as shown in FIG. 8C.

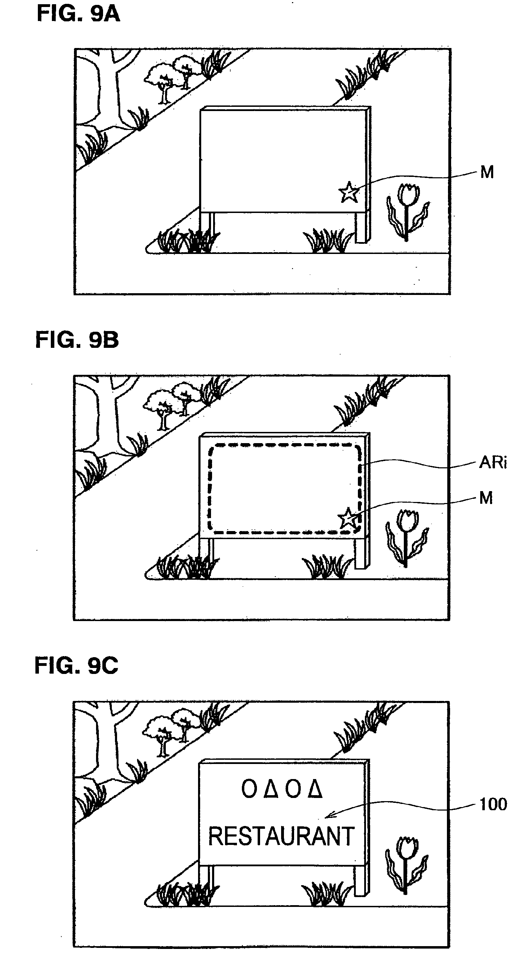

FIG. 9A shows a captured image that contains a signboard with a specific mark M. It is assumed that no message is written on the actual signboard.
A replacement area ARi is set based upon the position at which the mark M is detected in the image, as shown in FIG. 9B. For instance, such a replacement area ARi may range over an image area having no graphic or textural content.
Insertion image data are then inserted in the pixel range designated as replacement area ARi. The insertion image data may express, for instance, an advertising image.
As a result, a replacement image with an advertisement displayed over the otherwise empty signboard, as shown in FIG. 9C, is generated.

### 4. Replacement area and insertion image data

In order to generate replacement image data to be used as a replacement image as described above, a specific replacement area ARi must be first set in the image expressed with the captured image data.
Accordingly, the image analysis/replacement unit 12 in the imaging apparatus 1 executes image analysis on the captured image data designated as the processing target and sets the replacement area ARi. It is essential that an optimal area within the image be designated as the replacement area ARi, so as to generate replacement image data expressing a natural-looking image.
Examples of methods that may be adopted when setting the replacement area ARi are now described.

When replacing the content of a signboard with different content, as in the examples presented in FIGS. 5A through 5C and 8A through 8C, a signboard in the image is recognized and designated as a replacement area ARi. The signboard in the image may be recognized by analyzing shapes or recognizing letters through image analysis processing. Namely, a signboard may be detected by ascertaining the outlines of edges in the image or detecting the presence of any letters within an area within the edge lines or the like.
For instance, a quadrilateral area (rectangle, trapezoid or parallelogram) defined by edge lines in the image may be extracted. It is to be noted that while a signboard normally assumes a rectangular shape, it may be rendered as a trapezoid or as a parallelogram in an image depending upon the imaging direction or the angle of elevation or the perspective assumed during the imaging operation. Accordingly, it may be effective to execute analysis processing whereby the imaging direction, the angle of elevation or the like is estimated based upon the rough outlines of the edge lines (e.g., edge lines defining roads and buildings) in the image and a trapezoidal object or a parallelogram object that can be judged to be an image of an object that is actually rectangular is extracted from the image.
Once a quadrilateral area defined by edge lines is detected, a decision is made as to whether or not any letter is present within the quadrangle. For instance, letters may be detected through pattern recognition. It is to be noted that various logos, marks and the like may be stored in advance and a decision may be made through image pattern matching as to whether or not the captured image includes an image area that constitutes a logo or a mark.
If an image of letters (or a logo or mark) is contained within the quadrilateral area in the captured image, it is judged that the quadrilateral area is a signboard or the like and accordingly, the quadrilateral area is designated as a replacement area ARi.
It is to be noted that, instead of a quadrilateral area, a circular area, an elliptical area or the like may be judged to be a signboard.

In addition, assuming that the target signboard is an illuminated signboard such as a neon sign or an LED signboard, or a widescreen monitor display mounted at a wall, a quadrilateral area manifesting a great difference in brightness relative to the surrounding environment or a local area indicating a high level of brightness may be detected and designated as a replacement area ARi.

An image portion taken up by the sky may be designated as a replacement area ARi, as has been explained in reference to FIGS. 6A through 6C, by recognizing the sky as explained below.
First, an upper area, an upper left area or an upper right area in the image is assumed to be "sky".
Then, a decision is made as to whether or not an area of blue color (a shade of blue that can be considered to be sky blue) occupies the upper area at a specific ratio.
By applying these criteria, the range taken up by the sky within the image can be determined and the range taken up by the sky can be designated as a replacement area ARi.
In addition, since no extreme color changes or distinct objects are present over a certain range, it will tend to manifest only gentle gradations. Therefore, a range within the image having no edge lines (border edge lines) may be recognized as a sky area.
It is to be noted that while a sky area is recognized in the example described above, an area taken up by a body of water such as an ocean, a lake or the like may be determined and designated as a replacement area ARi.
In addition, a vehicle on a road may be recognized and the area occupied by the vehicle may be designated as a replacement area ARi.

The replacement area ARi in the example presented in FIGS. 7A through 7C,
in which letters are replaced with other content may be set by executing character recognition on the captured image. Namely, the replacement area ARi should be set so as to include the range over which the letters are detected. It is particularly desirable to set the replacement area ARi by ensuring that the replacement area does not range beyond the edge lines present around the letters.

FIGS. 9A through 9C present an example in which a replacement area ARi is set by recognizing the mark M.
For instance, a specific mark M may be displayed over an actual signboard or the like in advance, in particular for the replacement image data are generated.
In the image analysis, a decision is made as to whether or not the specific mark M is contained in the captured image.
If the specific mark M is detected in the image, a replacement area ARi is set based upon the position of the mark M. For instance, a quadrilateral area, a circular area, an elliptical area or an area of indeterminate shape but recognizable based upon edge lines, or the like, containing the mark M, is designated as the replacement area ARi. In addition, on the premise that the actual signboard has a plain surface with no message therein, as shown in FIG. 9A, a plain area containing the mark M may be designated as the replacement area ARi. It will be obvious that a replacement area ARi may be set at a signboard bearing some letters, a drawing or the like over a specific range so as to alter the letters or the drawing based upon the position of the mark M.
Furthermore, a plurality of marks M may be displayed over an actual signboard or the like and a replacement area ARi may be set over a range assuming a quadrilateral shape with the diagonal points thereof indicated by the marks or a range taking on the shape the apexes of which are indicated by the marks.

The method described above requires a specific range, to be designated as a replacement areaARi, to be indicated on the subject side.
For instance, the specific mark M may actually be put up on a signboard being installed on a wall surface of a building, at a window of a building or the like, so that the particular area in the captured image is used as the replacement area ARi where advertisement data and the like can be inserted.
It is to be noted that while the area to be used as the replacement area ARi is indicated on the subject side by using the mark M, a specific background pattern instead of a mark, may be displayed over the actual signboard or the like so as to allow the imaging apparatus 1 to recognize through image analysis the range of the background pattern and designate it as a replacement area ARi.
In addition, a barcode, a two-dimensional barcode, a light emitting element or the like may be set over a signboard or the like and in this case, the imaging apparatus 1 may set a replacement area ARi based upon the corresponding information detected through image analysis.

The image analysis/replacement unit 12 in the imaging apparatus 1 executes image analysis on the captured image data and sets a single replacement area ARi or a plurality of replacement areas ARi within the image through any of the methods described above.
Replacement image data are then generated by replacing all of or part of the pixel data in each replacement area ARi having been set with pixel data used as insertion image data.
The following is a description of examples of image content of the insertion image data.

The insertion image data may express a text image, a graphic image, a drawing or the like to be used for advertising purposes. Such an advertising image may carry corporate advertisement content, product/service advertisement content, public relations content originating from a public organization such as a municipal or national government agency or the like.
Such insertion image data used for advertising/public relations purposes may express a text image, an image of a logo, mark or the like.
In addition, the insertion image data may express an image that includes a specific object such as the blimp shown in FIG. 6C. Insertion image data to be inserted over the sky area, as in FIG. 6C, may express an image with advertising text or the like added in an ad balloon, a hot air balloon, an airplane, a banner or the like. Insertion image data to be inserted over the surface of a body of water such as an ocean may express an image of advertising text or the like added onto, for instance, a ship.
The insertion image data may instead express an image of advertising text or the like set on an automobile, a railway train or the like.
Insertion image data expressing such an advertising image may be stored in the insertion image storage unit 18 at the imaging apparatus 1 on a permanent basis, or insertion image data transmitted from the server apparatus 70 may be stored into the insertion image storage unit. Furthermore, various types of insertion image data recorded in a portable recording medium may be provided to the user and the insertion image data recorded in the portable recording medium may be taken into the insertion image storage unit 18 as the user loads the portable recording medium into the imaging apparatus 1 and reproduces the insertion image data.

Another example of insertion image data is a message text image.
The content of such a message text image may be created (entered) by the user freely or the user may be allowed to select any of various types of message text images prepared in advance.
Various types of message text images created in advance may be stored in the insertion image storage unit 18, or a message text image may be entered by the user to be stored into the insertion image storage unit 18.

Yet another example of insertion image data is a translation text image.
The translation processing unit 19 in the imaging apparatus 1 executes translation processing to generate translation text data. The translation text data thus generated are provided to the image analysis/replacement unit 12 to be used as insertion image data.

### 5. Insertion image data acquisition

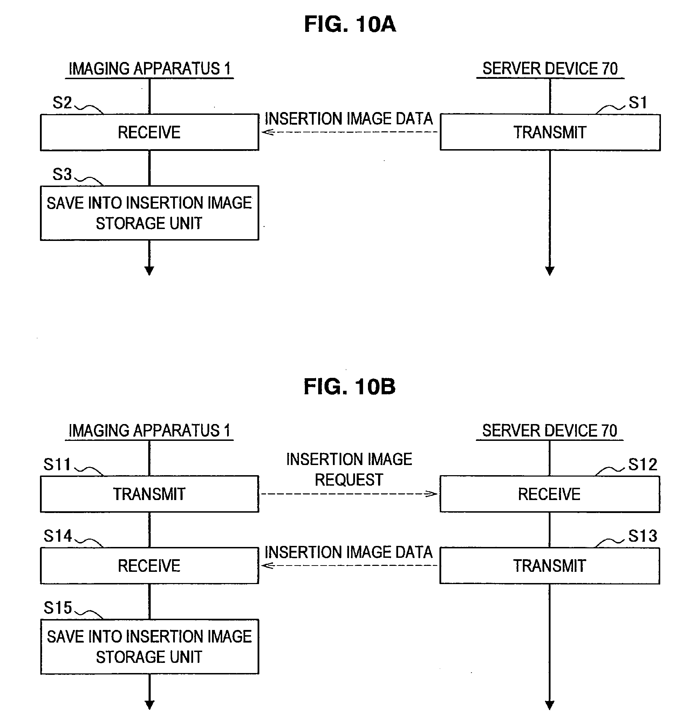

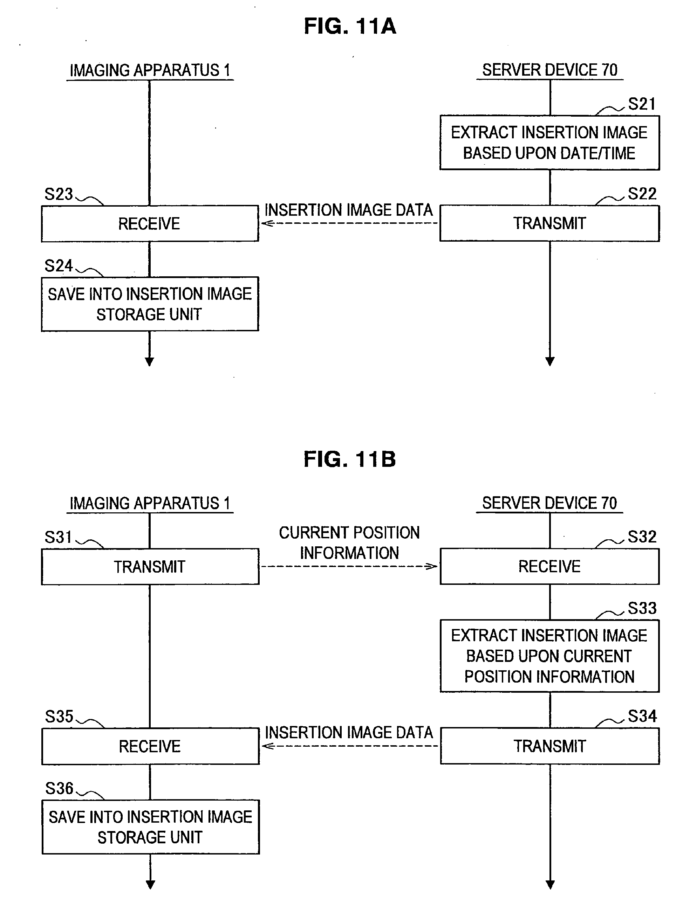

Insertion image data expressing advertising images and message text images are stored in the insertion image storage unit 18 at the imaging apparatus 1 and the image analysis/replacement unit 12 generates replacement image data by reading out insertion image data from, for instance, the insertion image storage unit 18 and using it.
While insertion image data expressing several types of advertising images and message text images prepared in advance may be stored in the insertion image storage unit 18 as explained earlier, a specially designed image or the like to be used as an advertising image or a message image may be made available from the server device 70 so as to enable the use of insertion image data with diverse content at the imaging apparatus 1.
Now, in reference to FIGS. 10A and 10B and FIGS. 11A through 11C, examples of operations through which the imaging apparatus 1 may obtain insertion image data from the server device 70 are described.

FIG. 10A presents an example in which the server device 70 transmits insertion image data to the imaging apparatus 1 on a regular cycle or on demand.
In response to a request from an advertiser such as a corporation, or under a contract with the advertiser, the server device 70 connects with the imaging apparatus 1 for purposes of communication to transmit specific insertion image data periodically or on demand (S1). Namely, the server control unit 72 engages the information management unit 74 in operation to read out the required insertion image data from the image database 77 and let the insertion image data be transmitted from the communication unit 73.
Upon receiving the transmitted insertion image data via the communication unit 15 (S2), the system controller 10 in the imaging apparatus 1 let the received insertion image data be saved into the insertion image storage unit 18 (S3).
Such an operation could be a preferable operation, for example, when the server device 70 transmits specific insertion image data to numerous imaging apparatuses 1 at once.

In the example presented in FIG. 10B, the imaging apparatus 1 requests insertion image data.
The system controller 10 of the imaging apparatus 1 let information for requesting an insertion image be transmitted to the server device 70 via the communication unit 15 (S11) at a given time point in response to a user operation, with regular timing or with timing with which image replacement processing is executed.
Upon detecting (S12) that the insertion image request has been received at the communication unit 73, the server control unit 72 of the server device 70 engages the information management unit 74 in operation to read out the required insertion image data from the image database 77. It then transmits (S13) via the communication unit 73 the insertion image data to the imaging apparatus 1 where the request has originated. Upon receiving the transmitted insertion image data at the communication unit 15 (S14), the system controller 10 of the imaging apparatus 1 saves the received insertion image data into the insertion image storage unit 18 (S 15).
Through the operation described above, the insertion image data are provided to the imaging apparatus 1 with the optimal operational timing for the imaging apparatus or with the timing requested by the user.

In the example presented in FIG 11A, the server device 70 transmits insertion image data to the imaging apparatus 1 at a specific date/time.
The information management unit 74 of the server device 70 checks the current date/time at the clock unit 76 and selects insertion image data in the image database 77 in correspondence to the current date/time (S21). The server control unit 72 then acquires a single set of insertion image data or a plurality of sets of insertion image data having been selected by the information management unit 74 and transmits the insertion image data to the imaging apparatus 1 by the communication unit 73 (S22).
Upon receiving the transmitted insertion image data at the communication unit 15 (S23), the system controller 10 of the imaging apparatus 1 saves the received insertion image data into the insertion image storage unit 18 (S24).
Through the operation described above, insertion image data with timely advertising content or timely message content can be provided to the imaging apparatus 1.
For instance, insertion image data with advertising content corresponding to a specific product launch date, a specific sale date or the like, advertising content optimal for a concert or sporting event to be held on a specific date, advertising content appropriate for a specific month/day or a specific season or the like can be provided to the imaging apparatus 1.
The server device 70 may register date/time information in correspondence to a given set of insertion image data in the image database 77 based upon an advertisement expiry date or an advertising duration specified by, for instance, the advertiser, or it may attach information indicating a specific season or a specific month/day corresponding to the advertising content or the message content to each set of insertion image data, so as to enable the information management unit 74 to search for timely insertion image data in the image database 77.
It is to be noted that the operation shown in FIG. 11A and the operation shown in FIG. 10B may be executed in combination so as to allow the server device 70 to provide to the imaging apparatus 10 insertion image data searched based upon the date/time at which an insertion image request is transmitted from the imaging apparatus 1.

In the example presented in FIG 11B, the server device 70 transmits insertion image data to the imaging apparatus 1 based upon the current position of the imaging apparatus.
The system controller 10 of the imaging apparatus 10 engages the communication unit 15 to transmit to the server device 70 position information detected by the position detection unit 17 (S31) on a regular basis, with timing corresponding to a user operation, with timing with which image replacement processing is executed or the like.
Upon receiving (S32) at the communication unit 73 the position information having been transmitted by the imaging apparatus 1, the server control unit 72 of the server device 70 provides the position information to the information management unit 74, which then is engaged in a search for insertion image data corresponding to the position. The information management unit 74 ascertains the current location of the user of the imaging apparatus 1 and determines stores, facilities and the like present in the vicinity by reading out map information from the map database in correspondence to the position information. It then searches through the image database 77 for insertion image data advertising a store, a facility or the like in the vicinity (S33).
The server control unit 72 then acquires a single set of insertion image data or a plurality of sets of insertion image data having been selected by the information management unit 74 and transmits the insertion image data to the imaging apparatus 1 via the communication unit 73 (S34).
Upon receiving the transmitted insertion image data at the communication unit 15 (S35), the system controller 10 of the imaging apparatus 1 saves the received insertion image data into the insertion image storage unit 18 (S36).
Through the operation described above, insertion image data carrying optimal advertising content or optimal message content for the current location of the user can be provided to the imaging apparatus 1.
For instance, insertion image data advertising a store or facility present in the vicinity of the current user location or insertion image data with community service announcement content can be provided to the imaging apparatus 1.
Based upon an advertising target area specified by, for instance, the advertiser, the server device 70 may register area information in correspondence to a given set of insertion image data in the image database 77 so as to enable the information management unit 74 to search through the image database 77 for the optimal insertion image data corresponding to the current user location.
Instead of corporate advertisements, various types of warnings (tsunami warnings, severe weather warnings and the like), weather information, traffic information or the like may be provided as location-specific insertion image data.

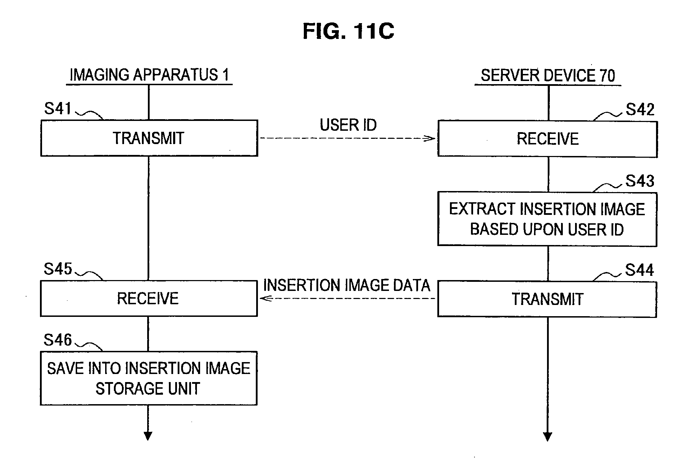

In the example presented in FIG 11C, the server device 70 transmits insertion image data suitable for the user of the particular imaging apparatus 1.
The system controller 10 of the imaging apparatus 10 engages the communication unit 15 to transmit to the server device 70 the user ID (or the imaging apparatus ID) (S41) on a regular basis, with timing corresponding to a user operation, with timing with which image replacement processing is executed or the like.
Upon receiving (S42) at the communication unit 73 the user ID having been transmitted by the imaging apparatus 1, the server control unit 72 of the server device 70 engages the information management unit 74 in operation to search for insertion image data deemed appropriate based upon the user ID. Based upon the user ID, the information management unit 74 searches through the user information storage unit 78 and reads out the information on the user with the particular user ID. The information read out by the information management unit may indicate the user's gender, age, hobbies, preferences and the like. Insertion image data with, for instance, advertising content matching the user information are then searched in the image database 77 (S43)
The server control unit 72 then acquires a single set of insertion image data or a plurality of sets of insertion image data having been selected by the information management unit 74 and transmits the insertion image data to the imaging apparatus 1 via the communication unit 73 (S44).
Upon receiving the transmitted insertion image data at the communication unit 15 (S45), the system controller 10 of the imaging apparatus 1 saves the received insertion image data into the insertion image storage unit 18 (S46).
Through the operation described above, insertion image data with advertising content or message content matching the genders, ages, hobbies, preferences and the like of individual imaging apparatus users can be provided to the individual imaging apparatuses 1.
At the server device 70, the target user gender, age, hobbies, preferences and the like may be registered in correspondence to the content of each set of insertion image data, so as to enable the information management unit 74 to search through the image database 77 for the optimal insertion image data for each user.
It is to be noted that instead of transmitting insertion image data in response to a request (in response to a transmission of the user ID or the imaging apparatus ID) from the imaging apparatus 1, the server device 70 may transmit insertion image data selected based upon the user ID to each imaging apparatus 1 periodically or on demand. For instance, as insertion image data with new advertising content are registered into the image database, the server device may search for users likely to be interested in the advertising content and transmit the particular insertion image data to imaging apparatuses 1 belonging to the users bearing user IDs indicated through the search.

As described above, insertion image data can be provided from the server device 70 to the imaging apparatus 1 in various modes. The insertion image data provided by the server device 70 and taken in to the insertion image storage unit 18 at the imaging apparatus 1 can be subsequently used when the image analysis/replacement unit 12 generates replacement image data.
It is to be noted that the insertion image data providing modes described above simply represent examples and insertion image data may be provided in any of various other modes.
For instance, if captured image data are saved with position information indicating the image capturing location and information indicating the image capturing date/time appended thereto, insertion image data may be provided in correspondence to the image capturing location and the image capturing date/time.
Namely, the position information indicating the image capturing location corresponding to a given set of captured image data to undergo the processing at the image analysis/replacement unit 12 may be transmitted to the server device 70 so as to enable the server device 70 to search for insertion image data corresponding to the position information indicating the image capturing location and to transmit suitable insertion image data to the imaging apparatus 1.
As an alternative, the image capturing date/time information appended to the captured image data may be transmitted to the server device 70 so as to enable the server device 70 to search for insertion image data corresponding to the particular image capturing date/time and to transmit suitable insertion image data to the imaging apparatus 1.
The image analysis/replacement unit 12 at the imaging apparatus 1, in turn, may execute replacement image generation processing by using the insertion image data thus provided so as to generate replacement image data containing an advertisement, a message or the like optimal for the image capturing location or the image capturing date/time at which the captured image were initially obtained, inserted therein.

### 6. Examples of image saving formats

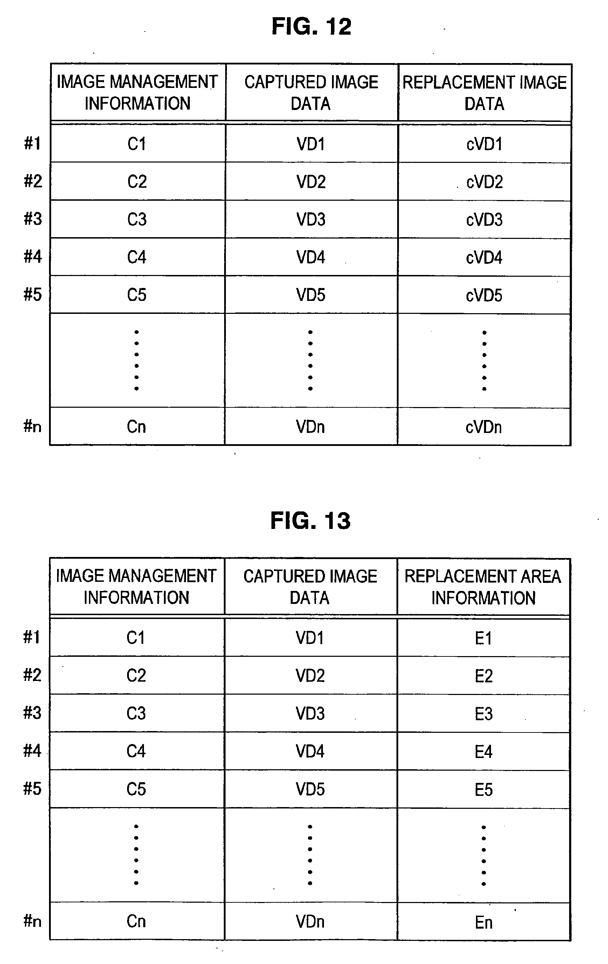

Next, examples of formats in which the processing results provided from the image analysis/replacement unit 12 may be saved in the imaging apparatus 1 are described.
As explained earlier, the image analysis/replacement unit 12 executes the processing for setting a replacement area ARi within the image expressed with the processing target captured image data and the processing for generating replacement image data by inserting insertion image data in the replacement area ARi having been set.
Replacement image data generated by the image analysis/replacement unit 12 through the processing described above may be saved into the storage unit 14 in the image saving format illustrated in FIG. 12.

FIG. 12 shows how image data may be saved in the storage unit 14.
Captured image data obtained through imaging operation executed at the imaging unit 3, captured image data received via the communication unit 15 or captured image data read out from a portable recording medium are saved into the storage unit 14.
Individual sets of captured image data having been obtained are saved as captured image data VD1, captured image data VD2,... captured image data VDn respectively corresponding to entry #1, entry #2, ... entry #n in the figure.
In addition, image management information C1, image management information C2, ... image management information Cn are recorded each in correspondence to one of the sets of image data. Each set of image management information includes information indicating the file name of the captured image data, the image type (video/still image), the data size, the compression format, identification information enabling identification of the apparatus used to capture the image, and the like. The image management information may further include information indicating the image capturing date/time (year/month/day/hour/minute/second) at which the image was captured and latitude/longitude information indicating the image capturing location detected via the position detection unit 17 at the time of the imaging operation.
In correspondence to the individual sets of captured image data VD1, VD2, ... VDn, replacement image data cVD1, replacement image data cVD2, ... replacement image data cVDn respectively are stored.
For instance, the replacement image data cVD1 generated by the image analysis/replacement unit 12 by executing processing for the processing target image data VD1 are saved in correspondence to the captured image data VD 1.
It is to be noted that a plurality of sets of replacement image data may be generated by using a single set of captured image data. In such a case, too, each set of replacement image data should be stored in correspondence to the initial captured image data.

While the image analysis/replacement unit 12 may execute the processing for setting the replacement area ARi and the replacement image data generation processing in succession, the processing for setting the replacement area ARi and the replacement image data generation processing may be executed at separate times, instead. In addition, it may simply execute the processing for setting the replacement area ARi and relegate the replacement image data generation processing to an external device 80.
In such a case, captured image data may be stored in the storage unit 14, as shown in FIG. 13, with replacement area information indicating the replacement area ARi also saved in the storage unit in correspondence to each pair of captured image data. Namely, replacement area information E1, replacement area information E2, ... replacement area information En is stored in correspondence to the individual sets of captured image data VD1, VD2, ... VDn, as shown in the figure.
For instance, as the image analysis/replacement unit 12 sets a single replacement area ARi or a plurality of replacement areas Ari for the processing target captured image data VD1, information indicating the pixel range(s) matching the single replacement area ARi or the plurality of replacement areas ARi may be saved as replacement area information E1 in correspondence to the captured image data VD1.
These measures make it possible to subsequently generate replacement image data by inserting insertion image data in each pixel area indicated by the replacement area information E.
This saving format is also ideal when replacement image data are generated by inserting different insertion image data each time the captured image is to be brought up on display.
In addition, the data saving format enables even an external device 80 that does not have a setting function for setting replacement areas ARi to generate replacement image data by using captured image data and the corresponding replacement area information transmitted thereto.

It is to be noted that the saving formats in FIGS. 12 and 13 may be adopted in combination to store both the replacement image data and the replacement area information in correspondence to each set of captured image data.

### 7. Example I of processing that may be executed by the image analysis/replacement unit

In response to an instruction issued by the system controller 10, the image analysis/replacement unit 12 executes processing for generating replacement image data for the processing target captured image data specified by the system controller 10.
The following is a description of example I of processing that may be executed by the image analysis/replacement unit 12, in which the processing for setting (a) replacement area(s) ARi within the image expressed by the processing target captured image data (replacement area setting processing) and the processing for generating replacement image data by inserting insertion image data in each replacement area ARi having been set (image replacement processing) are executed in succession.

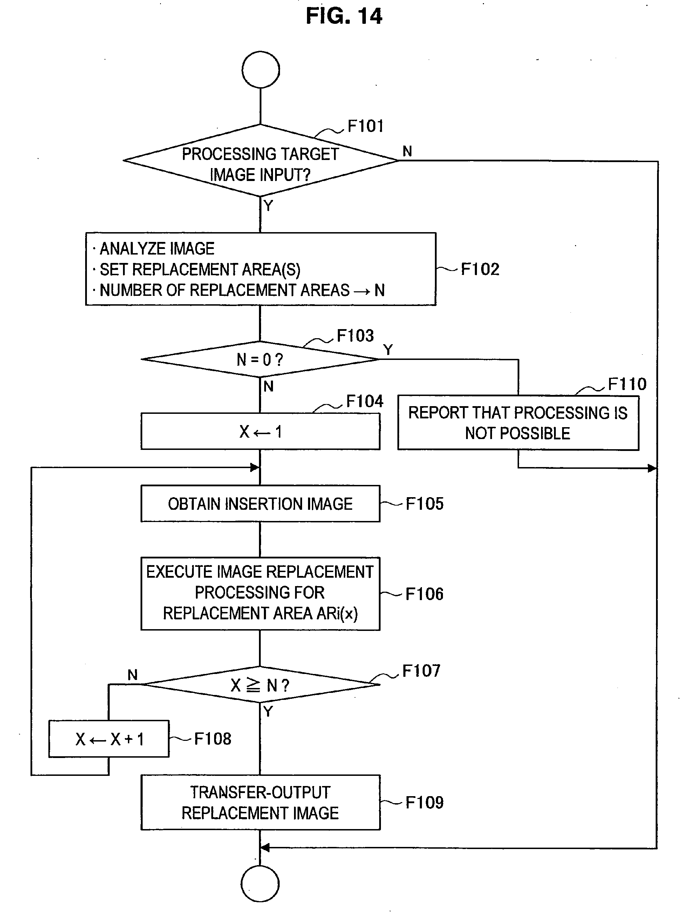

FIG 14 shows the processing executed by the image analysis/replacement unit 12 in response to an instruction issued by the system controller 10.
The system controller 10 transfers the processing target captured image data to the image analysis/replacement unit 12 where the captured image data are to undergo the processing shown in FIG 14. Captured image data obtained through imaging operation executed at the imaging unit 3 may be transferred from the imaging control unit 6 to the image analysis/replacement unit 12 to undergo the processing. Alternatively, captured image data received at the communication unit 15 may be transferred to the image analysis/replacement unit 12 or captured image data reproduced via the storage unit 14 may be transferred to the image analysis/replacement unit 12.
Once the processing target captured image data are input to the image analysis/replacement unit 12, the operation proceeds from step F101 to step F102 in FIG 14.

The image analysis/replacement unit 12 executes image analysis processing on the input captured image data and sets a single replacement area ARi or a plurality of replacement areas ARi within the image in step F102. The methods that may be adopted when setting the replacement area(s) ARi through image analysis have already been explained.
Once the replacement area(s) ARi have been set, the quantity of replacement areas ARi having been set is set as a variable n for substitution.

Next, the image analysis/replacement unit 12 makes a decision in step F103 as to whether or not the value of the variable N is equal to 0. In other words, it makes a decision as to whether no area has been set as a replacement area ARi within the image. While a replacement area ARi can be set through any of the methods described earlier by recognizing an area assuming a predetermined shape, recognizing an image area of sky or the like, or recognizing letters or the like, there may not be any area that can be designated as a replacement area ARi depending upon the image content.
Accordingly, if it is decided that N = 0 and that no replacement area ARi has been set, the operation proceeds to step F110, in which a message indicating that no replacement image data can be generated for the current processing target captured image data, is sent to the system controller 10 before the processing ends.

However, if at least one replacement area ARi has been set, the processing executed by the image analysis/replacement unit 12 proceeds to step F104 to set a variable X to 1.
Then, in step F105, the image analysis/replacement unit 12 obtains insertion image data from the insertion image storage unit 18 (or the translation processing unit 19) and in step F106, the image analysis/replacement unit executes processing for replacing the pixel data in an Xth replacement area ARi(X) with the pixel data in the insertion image data having been obtained. In other words, the image analysis/replacement unit generates replacement image data.

Any of diverse types of insertion image data may be selected as acquisition target insertion image data to be obtained in step F105. For instance, while insertion image data with advertising content may be selected for the Xth replacement area ARi(X) having been set by recognizing a signboard within the image, insertion image data randomly selected and read out from the insertion image storage unit 18 may be obtained or a set of insertion image data selected with a specific sequence each time the processing in step F105 is executed, may be obtained. If the Xth replacement area ARi(X) has been set by recognizing an image area where the sky or an ocean is present, insertion image data with image content appropriate to the sky or appropriate to a marine theme, e.g., a blimp or a ship, may be selected and read out.
Furthermore, the insertion image data most recently provided by the server device 17 through any of the operations shown in FIGS. 10A, 10B and 11A through 11C and taken into the image storage unit 18 may be selected first.
As an alternative, at the time of execution of the processing shown in FIG. 14, the server device 70 may be accessed, as shown in FIG. 10B, FIG. 11B or FIG. 11C, so as to receive the insertion image data provided by the server device and, in such a case, the insertion image data thus taken into the insertion image storage unit 18 may be read out in step F105.
Furthermore, if a message text image is to be used as the insertion image data, a list or the like of message text images may be brought up on display at the display unit 2 and a specific message text image may be selected in response to a user selection operation. As an alternative, the user may be allowed to generate a message text image by entering letters.
It will be obvious that the insertion image data may be selected without requiring user input. Insertion image data stored in the insertion image storage unit 18 may be randomly selected or may be selected in a specific sequence.
Moreover, provided that the operation input unit 11 is equipped with a biological sensor, specific insertion image data may be selected in correspondence to the user conditions detected by the biological sensor. For instance, the user's physical state, mood and the like may be estimated based upon the detected elements such as brain waves, perspiration, heart rate, etc., and insertion image data expressing a message text image appropriate for the estimated user state may be selected.
In addition, if translation text information is to be used as the insertion image data, text data should be generated in step F105 based upon the letters recognized in the replacement area ARi(X) and the text data thus generated should then be provided to the translation processing unit 19. Text data resulting from the translation processing executed at the translation processing unit 19 are subsequently handed over to the image analysis/replacement unit 12.

After obtaining the insertion image data in step F105 and generating the replacement image data by replacing the image content in the replacement area ARi(X) with the insertion image data in step F106, the image analysis/replacement unit 12 compares the value of the variable X with the value of the variable N (the number of replacement areas ARi that have been set) and makes a decision as to whether or not the processing has been executed for all the replacement areas ARi set in the image in step F 107.
If there is a replacement area ARi yet to be processed, the operation proceeds to step F108 to increment the value of the variable X and then the operation returns to step F105 to execute similar processing for the next replacement area ARi(X).

Once the processing has been executed for all the replacement areas ARi and X determined to be equal to N, the operation proceeds to step F109. By this point in time, replacement image data, with the image content in all the replacement areas ARi having been replaced, will have been generated. The replacement image data having been generated may have image content such as any of those shown in FIGS. 5C, 6C, 7C, 8C and 9C.
In response to an instruction issued by the system controller 10, the image analysis/replacement unit 12 transfer-outputs the generated replacement image data.
For instance, replacement image data to be display-output are transferred to the display control unit 7. The display control unit 7, in turn, engages the display unit 2 to bring up display of the replacement image data provided thereto.
Replacement image data to be transmit-output to an external device 80 or the server device 70, on the other hand, are transferred to the communication unit 15. The communication unit 15, in turn, executes transmission processing for transmitting the replacement image data provided thereto.
Replacement image data intended for storage are transferred to the storage unit 14. The replacement image data may then be stored in the format shown in FIG. 12 at the storage unit 14. Replacement image data to be output and recorded into a portable recording medium are transferred to the storage unit 14 (provided that the storage unit 14 is equipped with a recording/reproduction unit corresponding to the specific type of portable recording media) where the transferred replacement image data are recorded into the portable recording medium.

In processing example I, the replacement area setting processing (F101 ∼ F103) and the image replacement processing (F104 ∼ F109) are executed in succession, as described above.
It is to be noted that while the processing described above simply needs to be executed on image data corresponding to a single frame when the captured image data express a still image, the processing described above must be executed individually for each of the frames constituting processing target captured image data expressing a video image.

### 8. Processing example II of processing that may be executed by the image analysis/replacement unit

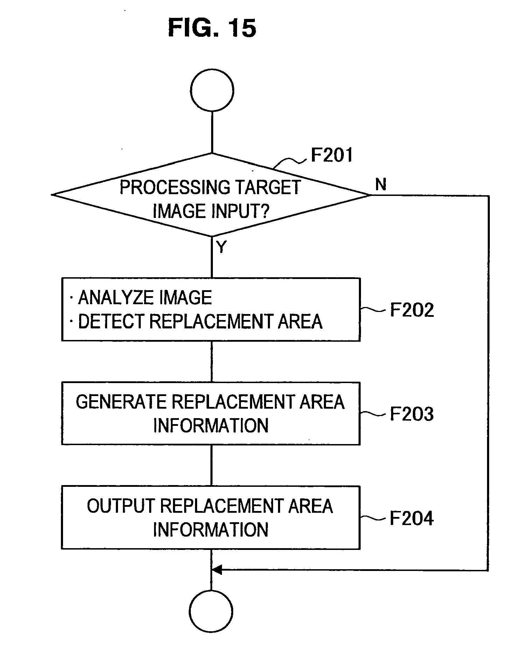

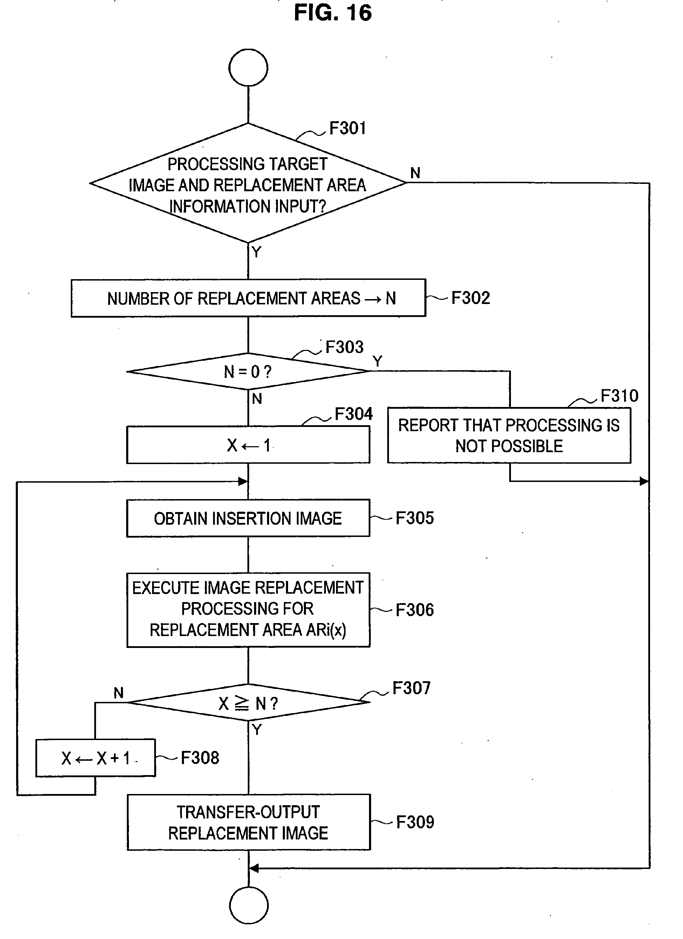

The image analysis/replacement unit 12 may execute the replacement area setting processing for setting a replacement area ARi within the image expressed with the processing target captured image data with timing different from the timing with which the image replacement processing for generating replacement image data by inserting insertion image data in the replacement area ARi having been set, is executed. In processing example II described below in reference to FIGS. 15 and 16, the replacement area setting processing and the image replacement processing are executed independently of each other.

FIG. 15 shows the replacement area setting processing executed by the image analysis/replacement unit 12.
At the time of execution of the processing shown in FIG 15 by the image analysis/replacement unit 12, the system controller 10 issues an instruction for, for instance, the imaging control unit 6, the storage unit 14 or the communication unit 15 to transfer the processing target captured image data to the image analysis/replacement unit 12.
As the processing target captured image data are input to the image analysis/replacement unit 12, the operation proceeds from step F201 to step F202 in the processing shown in FIG. 15.

The image analysis/replacement unit 12 executes image analysis processing on the input captured image data and sets a single replacement area ARi or a plurality of replacement areas ARi within the image in step F102. The methods that may be adopted when setting the replacement area(s) ARi through image analysis have already been explained.
Once the replacement areas ARi are set, replacement area information is generated in step F203. The replacement area information generated in this step indicates the pixel area(s) matching the single replacement area ARi or the plurality of replacement areas ARi having been set (or indicates that no replacement area has been set).
Once the replacement area information has been generated, the image analysis/replacement unit 12 outputs the replacement area information in step F204. Under control executed by the system controller 10, the replacement area information is transferred to the storage unit 14 where it is stored in a format such as that shown in FIG. 13.

With replacement area information E stored in correspondence to the captured image data VD as shown in FIG. 13, replacement image data can be generated later by using the captured image data VD and the corresponding replacement area information E.
The system controller 10 reads out a specific set of captured image data VD and the corresponding replacement area information E saved in correlation to each other as shown in FIG. 13 from the storage unit 14 and transfers the captured image data and the replacement area information thus read out to the image analysis/replacement unit 12, which then undertakes the replacement image data generation.
As the captured image data VD and the replacement area information E are provided thereto, the image analysis/replacement unit 12 executes the image replacement processing shown in FIG. 16.

After the captured image data VD and the replacement area information E have been input to the image analysis/replacement unit 12, the operation proceeds from step F301 to step F302 in which the image analysis/replacement unit checks the replacement area information and sets the number of replacement areas indicated in the replacement area information as the variable N for substitution.

Next, the image analysis/replacement unit 12 makes a decision in step F303 as two whether or not the value of the variable N is equal to 0. Accordingly, if it is decided that N = 0 and that no replacement area ARi has been set for the captured image data having been input, the operation proceeds to step F310, in which a message indicating that no replacement image can be generated for the current processing target captured image data, is sent to the system controller 10 before the processing ends.

However, if at least one replacement area ARi has been set, the processing executed by the image analysis/replacement unit 12 proceeds to step F304 to set a variable X to 1. Since the processing executed in steps F304 - F309 is identical to that executed in steps F104 ∼ F109 in FIG. 14, a repeated explanation is not provided.
In step F309, the replacement image data having been generated through the processing executed in steps F304 ∼ F309 are transferred to the display control unit 7 for display-output, are transferred to the communication unit 15 to undergo transmission processing or are transferred to the storage unit 14 to be stored into a built-in recording medium or a portable recording medium.

In processing example II, the image analysis/replacement unit 12 may execute the replacement area setting processing shown in FIG. 14 and the image replacement processing shown in FIG. 15 independently of each other at separate time points in response to instructions issued by the system controller 10.

### 9. Examples of operational procedures

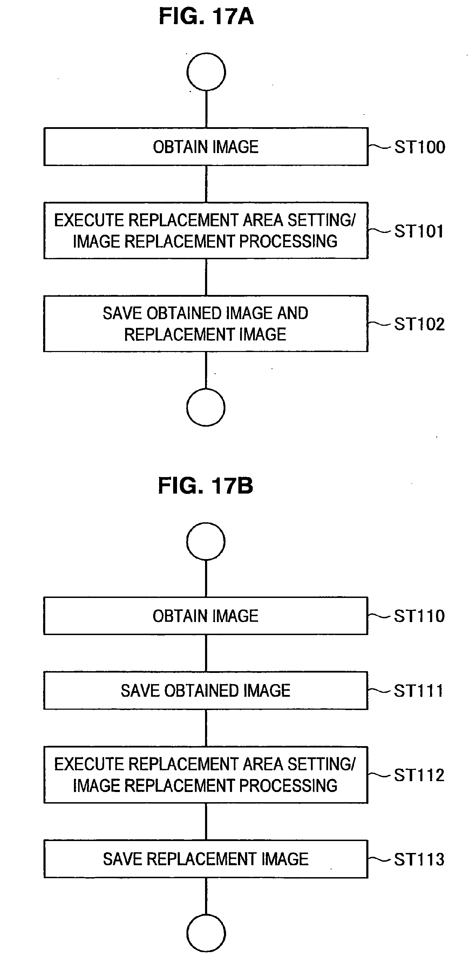

The image analysis/replacement unit 12 sets replacement areas ARi and generates replacement image data as has been explained in reference to processing example I and processing example II.
The imaging apparatus 1 in the embodiment may engage in operation in conjunction with the processing executed by the image analysis/replacement unit 12 described above by adopting any of various operational procedures.
The following is a description of examples of operational procedures that may be executed at the imaging apparatus 1 under control executed by the system controller 10, given in reference to FIGS. 17A through 17D, 18A, 18B and 19A through 19C. Each operational step is executed by the appropriate block under control executed by the system controller 10.

The operational procedure shown in FIG. 17A is as follows.
Captured image data are obtained in step ST100.
It is to be noted that "obtain image" in FIGS. 17A through 17D, 18A, 18B, 19A and 19B means that captured image data generated through imaging operation executed at the imaging unit 3 are obtained, that captured image data received via the communication unit 15 are obtained or that captured image data read out from a portable recording medium in the storage unit 14 are obtained.
In step ST101, the captured image data having been obtained in step ST100 are provided to the image analysis/replacement unit 12 where they undergo the replacement area setting processing and the image replacement processing. In other words, the image analysis/replacement unit 12 is engaged in the processing in processing example I described earlier.
In step ST102, the captured image data having been obtained in step ST100 and the replacement image data having been generated by the image analysis/replacement unit 12 in step ST101 are saved into the storage unit 14. Namely, the captured image data and the replacement image data assigned with a specific common entry #n, are saved in correspondence to each other, as shown in FIG. 12.

The operational procedure shown in FIG. 17B is as follows.
Captured image data are obtained in step ST110.
In step ST111, the captured image data having been obtained in step ST110 are saved into the storage unit 14.
In step ST112, the captured image data having been obtained in step ST110 are provided to the image analysis/replacement unit 12 where they undergo the replacement area setting processing and the image replacement processing in processing example I.
In step ST113, the replacement image data having been generated by the image analysis/replacement unit 12 in step ST112 are saved into the storage unit 14. At this point in time, the captured image data and the replacement image data, assigned with a common entry #n, are saved in correspondence to each other as shown in FIG. 12.

Through the operational procedures in FIGS. 17A and 17B described above, replacement image data are generated based upon the captured image data and the captured image data and the replacement image data are saved in the storage unit 14 in the format shown in FIG. 12.
The captured image data and the replacement image data saved in the storage unit 14 can be read out later for display-output, to be transmitted to an external device 80 or the server device 70, or to be recorded into a portable recording medium.

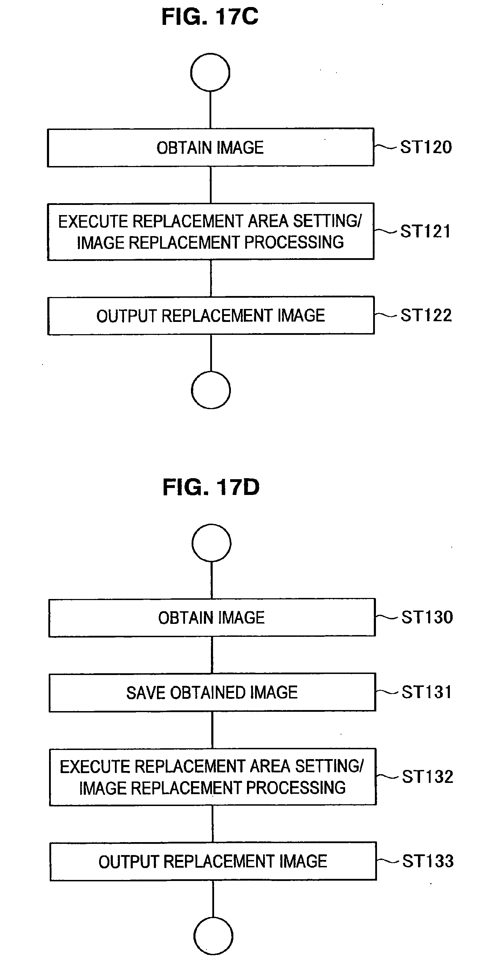

The operational procedure shown in FIG. 17C is as follows.
Captured image data are obtained in step ST120.
In step ST121, the captured image data having been obtained in step ST120 are provided to the image analysis/replacement unit 12 where they undergo the replacement area setting processing and the image replacement processing in processing example I.
In step ST122, the replacement image data having been generated by the image analysis/replacement unit 12 in step ST101 are output.
It is to be noted that "output replacement image" in FIGS. 17C, 17D, 18A, 18B and 19C means that the replacement image data are transferred to the display control unit 7 to be display-output at the display unit 2, that the replacement image data are transferred to the communication unit 15 for transmit-output, or that the replacement image data are transferred to the storage unit 14 (provided that the storage unit 14 is equipped with a recording/reproduction unit compatible with a specific type of portable recording medium) to be recorded into a portable recording medium.

The operational procedure shown in FIG. 17D is as follows.
Captured image data are obtained in step ST130.
In step ST131, the captured image data having been obtained in step ST130 are saved into the storage unit 14.
In step ST132, the captured image data having been obtained in step ST130 are provided to the image analysis/replacement unit 12 where they undergo the replacement area setting processing and the image replacement processing in processing example I.
In step ST133, the replacement image data having been generated by the image analysis/replacement unit 12 in step ST132 are output.

Through the operational procedures in FIGS. 17C and 17D described above, the replacement image data having been generated are output without saving them in the imaging apparatus 1 (in a built-in recording medium such as an HDD or a solid-state memory at the storage unit 14).

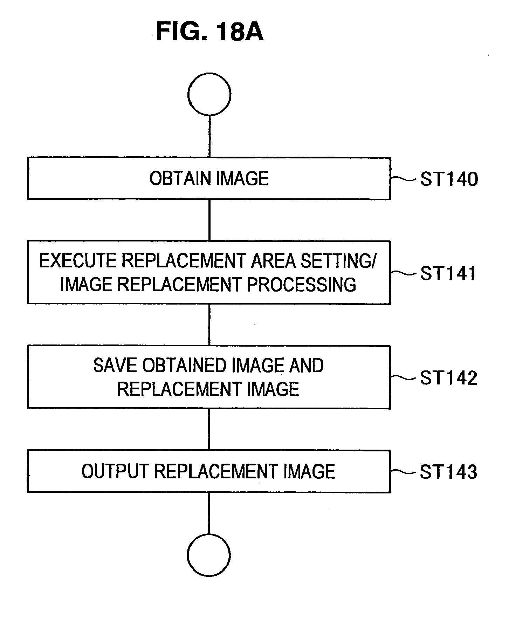

The operational procedure shown in FIG. 18A is as follows.
Captured image data are obtained in step ST140.
In step ST141, the captured image data having been obtained in step ST140 are provided to the image analysis/replacement unit 12 where they undergo the replacement area setting processing and the image replacement processing in processing example I.
In step ST142, the captured image data having been obtained in step ST140 and the replacement image data having been generated by the image analysis/replacement unit 12 in step ST141 are saved into the storage unit 14.
In step ST143, the replacement image data having been generated by the image analysis/replacement unit 12 in step ST142 are output.

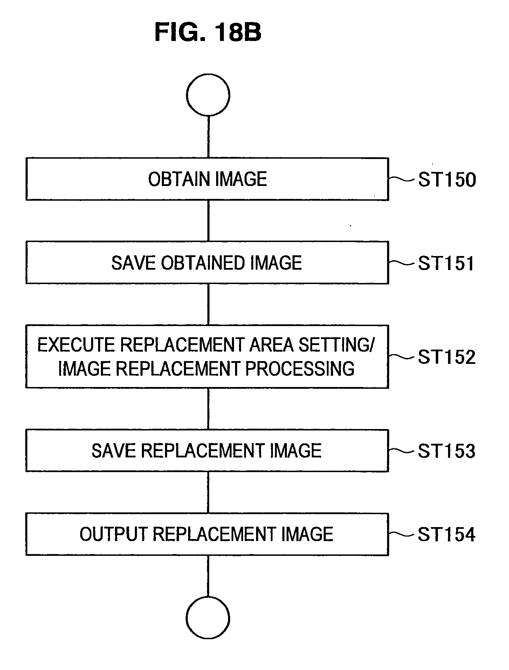

The operational procedure shown in FIG. 18B is as follows.
Captured image data are obtained in step ST150.
In step ST151, the captured image data having been obtained in step ST150 are saved into the storage unit 14.
In step ST152, the captured image data having been obtained in step ST150 are provided to the image analysis/replacement unit 12 where they undergo the replacement area setting processing and the image replacement processing in processing example I.
In step ST153, the replacement image data having been generated by the image analysis/replacement unit 12 in step ST152 are saved into the storage unit 14.
In step ST154, the replacement image data having been generated by the image analysis/replacement unit 12 in step ST152 are output.

Through the operational procedures in FIGS. 18A and 18B, the replacement image data having been generated are output concurrently as they are saved in the imaging apparatus 1 (into a built-in recording medium such as an HDD or a solid-state memory at the storage unit 14).

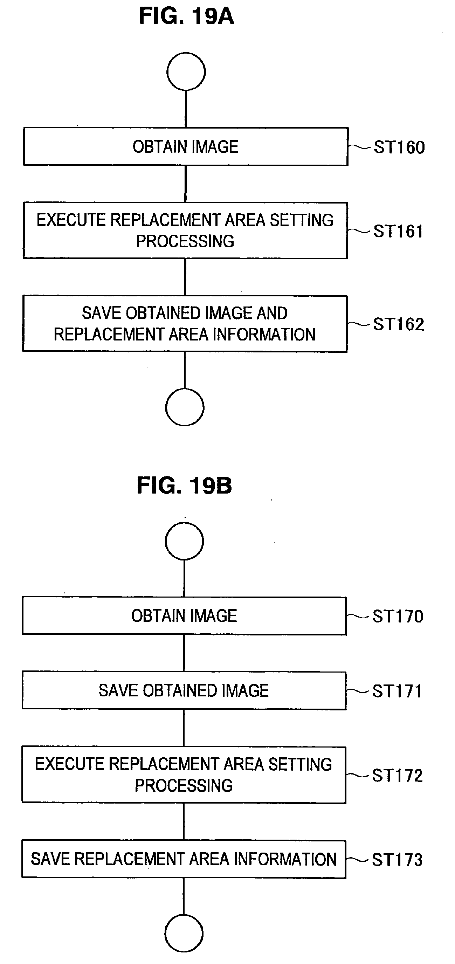

The operational procedure shown in FIG. 19A is as follows.
In step ST160, captured image data are obtained.
In step ST161, the captured image data obtained in step ST160 are provided to the image analysis/replacement unit 12 where they undergo the replacement area setting processing (see FIG. 15) in processing example II explained earlier.
In step ST162, the captured image data obtained in step ST160 and the replacement area information having been generated by the image analysis/replacement unit 12 in step ST161 are saved into the storage unit 14 in the format shown in FIG. 13.

The operational procedure shown in FIG. 19B is as follows.
In step ST170, captured image data are obtained.
In step ST171, the captured image data obtained in step ST170 are saved into the storage unit 14.
In step ST172, the captured image data obtained in step ST170 are provided to the image analysis/replacement unit 12 where they undergo the replacement area setting processing (see FIG. 15) in processing example II explained earlier.
In step ST173, the replacement area information having been generated by the image analysis/replacement unit 12 in step ST172 is saved into the storage unit 14. Ultimately, the captured image data and the replacement area information are saved in the format shown in FIG 13.

Through the operational procedures in FIGS. 19A and 19B, the replacement area information resulting from the replacement area setting processing executed in processing example II is saved together with the captured image data. It is to be noted that the captured image data and the replacement area information may be saved by transmitting them to an external device 80 or the server device 70 via the communication unit 15. In other words, the replacement area information may be saved together with the captured image data at an external device 80 or the server device 70.

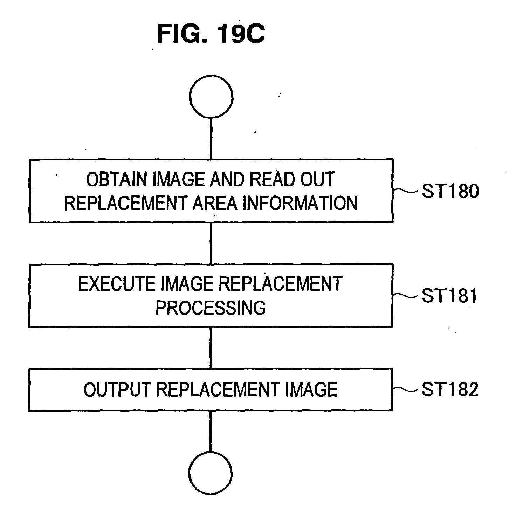

The operational procedure shown in FIG. 19C is as follows.
In step ST180, captured image data and the corresponding replacement area information are read out. Namely, the captured image data and the replacement area information recorded in the format shown in FIG. 13 through the operation shown in either FIG. 19A or in FIG. 19B are read out from the storage unit 14.
In step ST181, the captured image data and the replacement area information having been obtained in step ST180 are provided to the image analysis/replacement unit 12 where they undergo the image replacement processing (see FIG 16) in processing example II.
In step ST182, the replacement image data having been generated by the image analysis/replacement unit 12 in step ST181 are output.

Thus, through the operational procedure in FIG. 19C, the captured image data and the replacement area information saved as shown in FIG. 13 in the storage unit 14 are used to generate replacement image data and the generated replacement image data are output, following the operation in FIG. 19A or 19B.
It is to be noted that captured image data and replacement area information saved in an external device 80 or the server device 70, may be transmitted from the external device 80 or the server device 70, received and taken into the imaging apparatus in step F180. Or captured image data and replacement area information saved in a portable recording medium, may be read out from the portable recording medium in step F180.
In addition, replacement image data may be saved into the storage unit 14 either before or after outputting the replacement image data in step F182 in an alternative operational procedure.

While examples of operations that may be executed at the imaging apparatus 1 have been described above, the imaging apparatus may engage in operation through any of various other operational procedures.

### 10. Advantages of the embodiment, variations and examples of expanded applications

In the embodiment described above, the image expressed with captured image data is processed by ensuring that the appearance of the image will not be significantly altered, so as to generate replacement image data expressing a replacement image such as any of those shown in FIGS. 5C, 6C, 7C, 8C and 9C. Any of various types of information, such as an advertisement, a message and translation text can be provided in the form of replacement image data. An advantage is thus achieved in that the added value of the captured image can be increased without significantly altering the original image content.

For instance, the use of advertising information as insertion image data will create new advertising opportunities for the advertiser and ultimately, the system in the embodiment can be utilized as a highly effective advertising medium. In other words, a new business model can be created based upon the system achieved in the embodiment.
The system also provides the user with useful information such as advertising information.
More specifically, as insertion image data with, for instance, advertising content are provided from the server device 70 in correspondence to the current date/time, the current position or the user ID, the particular user will be provided with a timely advertisement, an advertisement appropriate to the current user location, an advertisement likely to prove useful to the particular user or the like. In other words, the value of the replacement image data can be enhanced through the system.

In addition, the use of a message text image as insertion image data will make it possible to customize the image as the added message will render the image more attractive or relate to the user's personal feelings. This, in turn, will widen the range of user engagement or create a new image utilization mode.

The use of translation text as insertion image data will assure better user convenience. For instance, a user wearing a wearable imaging apparatus 1 such as that shown in FIG. 1A, on an overseas trip or the like, will be able to read text actually provided in a foreign language on a signboard or the like, in the user's visual field, translated into his mother tongue, as the replacement image data with the translation text are immediately output and displayed at the display unit 2. Under such circumstances, the user is bound to find the system very convenient.

The present invention is not limited to the embodiment described above and allows for diverse variations and examples of expanded application with regard to the structure that may be adopted in the imaging apparatus 1 or processing that may be executed in the imaging apparatus 1.
The image processing apparatus in the embodiment of the present invention may be any of various apparatuses other than the imaging apparatus 1.

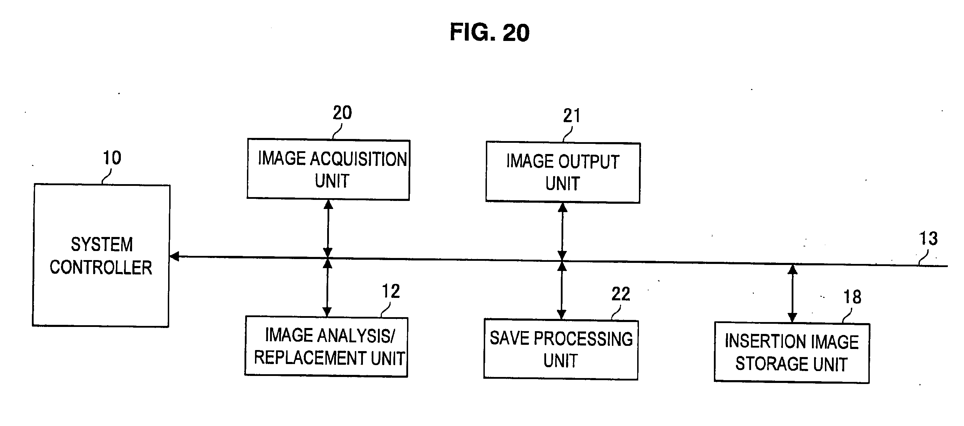

FIG. 20 shows the image processing apparatus achieved in the embodiment of the present invention comprising the system controller 10, the image acquisition unit 20, the image analysis/replacement unit 12, a save processing unit 22, an image output unit 21 and the insertion image storage unit 18.
Any of various devices equipped with these structural components may embody the image processing apparatus according to the present invention.
As an alternative, a device adopting a structure that includes neither the image output unit 21 nor the save processing unit 22 or that does not include either the image output unit 21 or the save processing unit 22 may constitute the image processing apparatus achieved in the embodiment of the present invention.

The image acquisition unit 20 is a block that obtains the captured image data to undergo the processing at the image analysis/replacement unit 12. As has been described in reference to the imaging apparatus 1 in the embodiment, the image acquisition unit 20 may be constituted with the imaging unit 3 and the imaging control unit 6, the communication unit 15, a reproduction drive that reproduces information in a portable recording medium such as an optical disk or a memory card to read out the captured image data recorded in the portable recording medium, or the like.
In addition, the captured image data obtained by the image acquisition unit 20 may be still image data or video data.

The save processing unit 22, which executes processing for saving the replacement image data, is equivalent to the storage unit 14 in the embodiment.
It is to be noted that in an application in which the replacement image data are transmitted to an external device 80 or the server device 70 to be saved at the external device 80 or the server device 70 as in the mode shown in FIG 3B or 3C, the communication unit 15 engaged in the transmission of the replacement image data is equivalent to the save processing unit 22. It will be obvious that the replacement image data may be transmitted either through wireless transmission or wired transmission.

The image output unit 21 is equivalent to the display unit 2 that display-outputs the replacement image data in the above embodiment. In addition, an output unit that outputs the replacement image data so as to display the replacement image data at an external monitor device, too, may be regarded as the image output unit 21.
Furthermore, the communication unit 15 that transmits the replacement image data to an external device 80 or the server device 70 through wired connection or wireless connection, as shown in FIG 3B or FIG. 3C, too, may be regarded as the image output unit 21.
The image output unit 21 may also be constituted with a recording drive that records the replacement image data into a portable recording medium so as to allow the replacement image data to be exported via the portable recording medium from the apparatus.

As described above, the image acquisition unit 20, the image output unit 21 and the save processing unit 22 may each assume any of extremely diverse modes. Taking these premises into consideration, the image processing apparatus according to an embodiment of the present invention may be realized as a monitor display device, a communication device or an image data saving device without an imaging function, an image editing device that composes an image, or the like, instead of an imaging apparatus such as a still camera or a video camera.

In addition, the image analysis/replacement unit 12 has been described as a unit that executes the replacement area setting processing and the image replacement processing. In other words, the replacement area setting unit and the replacement image generation unit as referred to in the claims of the present invention are embodied in the image analysis/replacement unit 12.
However, the image processing apparatus according to an embodiment of the present invention, such as the imaging apparatus 1, may instead come equipped with only either the replacement area setting unit or the replacement image generation unit. Namely, the present invention may be adopted in an apparatus equipped with an image analysis unit so as to execute the replacement area setting processing alone within the apparatus or equipped with an image replacement unit so as to execute the image replacement processing alone within the apparatus.
For instance, the replacement area setting processing may be executed at a given device and the captured image data and the replacement area information may be provided to another device. The image replacement processing will be executed at the other device by using the captured image data and the replacement area information provided thereto to generate the replacement image data.

## Claims

1. An image processing apparatus comprising:
a captured image acquisition unit that obtains captured image data;
an insertion image storage unit that stores insertion image data;
a replacement area setting unit that sets a replacement area within an image of the captured image data obtained by the captured image acquisition unit; and
a replacement image generation unit that generates replacement image data by executing processing for replacing all of or part of pixel data within the replacement area with the insertion image data read out from the insertion image storage unit.

2. The image processing apparatus according to claim 1, wherein the captured image acquisition unit includes an imaging unit that captures an image, and obtains the captured image data by image capturing at the imaging unit.

3. The image processing apparatus according to claim 2, wherein the imaging unit is constituted with a CCD sensor or a CMOS sensor for an image sensor.

4. The image processing apparatus according to claim 1, wherein the captured image acquisition unit includes a communication unit that communicates with an external communication device, and obtains the captured image data by receiving the captured data through communication of the communication unit with the external communication device.

5. The image processing apparatus according to claim 1, wherein the captured image acquisition unit includes a reproduction unit that reproduces information from a portable recording medium, and obtains the captured image data by reproduction of the portable recording medium via the reproduction unit.

6. The image processing apparatus according to claim 1, having:
a communication unit that communicates with an external communication device, wherein
the insertion image storage unit stores the insertion image data transmitted from the external communication device and received at the communication unit.

7. The image processing apparatus according to claim 1, further comprising:
a save processing unit that executes save processing for the replacement image data generated by said replacement image generation unit and/or information of the replacement area set by the replacement area setting unit.

8. The image processing apparatus according to claim 7, wherein the save processing unit includes a recording unit that records information into a recording medium, and for the save processing, records the replacement image data and/or the replacement area information into the recording medium.

9. The image processing apparatus according to claim 7, wherein the save processing unit includes a communication unit that communicates with an external communication device, and for the save processing, transmits the replacement image data and/or the information of the replacement area to the external communication device.

10. The image processing apparatus according to claim 1, further comprising:
an image output unit that executes output processing for the replacement image data generated by the replacement image generation unit.

11. The image processing apparatus according to claim 10, wherein the image output unit includes a display unit and, for the output processing, display-outputs the replacement image data at the display unit.

12. The image processing apparatus according to claim 10, wherein the image output unit includes a communication unit that communicates with an external communication device, and for the output processing, transmit-outputs the replacement image data to the external communication device via the communication unit.

13. The image processing apparatus according to claim 10, wherein the image output unit includes a recording unit that records information into a portable recording medium, and for the output processing, records the replacement image data into the portable recording medium by the recording unit.

14. The image processing apparatus according to claim 1, wherein the replacement area setting unit detects a specific image within the captured image data by image analysis processing on the captured image data and sets the replacement area based upon the detected image.

15. The image processing apparatus according to claim 1, wherein the insertion image data is an advertising image, a message text image or a translation text image.

16. An image processing method comprising steps of:
obtaining captured image data;
setting a replacement area within an image of the obtained captured image data;
reading out insertion image data stored; and
generating replacement image data by replacing all or part of pixel data within the replacement area with the read out insertion image data.

17. An image processing system having an image processing apparatus and a server device capable to communicate with each other, wherein:
the image processing apparatus includes
a captured image acquisition unit that obtains captured image data,
a reception unit that receives insertion image data transmitted from the server device,
an insertion image storage unit that stores the insertion image data received at the reception unit,
a replacement area setting unit that sets a replacement area within an image of the captured image data obtained by the captured image acquisition unit, and
a replacement image generation unit that generates replacement image data by executing processing for replacing all of or part of pixel data within the replacement area with the insertion image data read out from the insertion image storage unit, and
the server device includes a transmission unit that transmits the insertion image data to the image processing apparatus.

18. An image processing apparatus comprising:
a captured image acquisition unit that obtains captured image data;
a replacement area setting unit that sets a replacement area within an image of the captured image data obtained by the captured image acquisition unit; and
a save processing unit that executes save processing for the captured image data and information of the replacement area set by the replacement area setting unit.

19. An image processing apparatus comprising:
a recording/reproduction unit that records and reproduces captured image data and information of a replacement area set for the captured image data by correlating the captured image data and the information to each other;
an insertion image storage unit that stores insertion image data; and
a replacement image generation unit that generates replacement image data by obtaining the captured image data and the information of the replacement area from the recording/reproduction unit and executing processing on the obtained captured image data for replacing all of or part of pixel data within the replacement area indicated by the information of the replacement area with the insertion image data read out from the insertion image storage unit.
